# EUROPEAN PATENT SPECIFICATION

(11) **EP 2 999 293 B1**
(45) Date of publication and mention of the grant of the patent: **25.03.2020**
(21) Application number: 13884680.3
(22) Date of filing: 26.12.2013
(51) Int. Cl.: H04W 76/18, H04W 4/70, H04W 84/22

(54) **REPRESENTATIVE FOR MTC-GROUP**
REPRÄSENTANT EINER MTC-GRUPPE
REPRÉSENTANT D'UN GROUPE MTC

(30) Priority: 15.05.2013 JP 2013103219
(43) Date of publication of application: 23.03.2016
(73) Proprietor: NEC Corporation, Tokyo 108-8001 (JP)
(72) Inventor: SUZUKI, Takaaki, Tokyo 108-8001 (JP); IWAI, Takanori, Tokyo 108-8001 (JP)
(74) Representative: MacDougall, Alan John Shaw
(86) International application number: PCT/JP2013/007609
(87) International publication number: WO 2014/184834

(56) References cited:
- EP-A2- 0 975 186
- WO-A1-2006/101168
- WO-A1-2009/133599
- WO-A1-2013/021532
- JP-A- H09 261 735
- JP-A- 2000 333 249
- JP-A- 2001 045 571
- KPN: "Key issue - Signalling congestion in PS core network", 3GPP DRAFT; S2-101456_SIGNALLING CONGESTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 16 February 2010 (2010-02-16), XP050433967, [retrieved on 2010-02-16]
- "3rd Generation Partnership Project; Technical Specification Group Services and System Aspects; System Improvements for Machine-Type Communications (Release 11)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V2.0.0, 12 September 2012 (2012-09-12), pages 1-166, XP050649065, [retrieved on 2012-09-12]
- PAIVA R C D ET AL: "Overload Control Method for Synchronized MTC Traffic in GERAN", VEHICULAR TECHNOLOGY CONFERENCE (VTC FALL), 2011 IEEE, IEEE, 5 September 2011 (2011-09-05), pages 1-5, XP032029707, DOI: 10.1109/VETECF.2011.6093223 ISBN: 978-1-4244-8328-0

## Description

### Technical Field

The present invention relates to a control apparatus, a communication system, a communication apparatus, a communication method, and a program, and relates to control processing to control a connection timing when, for example, a communication apparatus is connected to a network.

### Background Art

In recent years, various types of communication terminals such as personal computers, mobile telephones, and smartphones have been used, and a user who owns a plurality of communication terminals generally uses each of them separately according to the purpose of its use. In such a case, the user needs to make a contract for using a communication line for each communication terminal. For example, a user who owns a mobile telephone and a smartphone needs to make a contract with a communication provider to use the communication line for each communication terminal. Therefore, the amount of the contract fee for using the communication line increases as the number of communication terminals owned by the user increases. Further, if a Machine to Machine (M2M) communication spreads in the future, the number of M2M devices managed by one company or one group would increase, and thus the amount of the contract fee for using the communication line, which is required for each M2M device to be managed, also increases.

For example, Non-Patent Literature 1 defined by the 3GPP, which is a standardization organization regarding a mobile communication network, discloses a network configuration for performing communication using a Machine Type Communication (MTC) device in the mobile communication network. The MTC device corresponds to an M2M device.

One possible solution to decrease the amount of the contract fee for using the communication line imposed on the user as described above is to provide a communication service that allows the user to use a plurality of communication terminals with a contract for using a single communication line. Since such a communication service allows a plurality of users to share a single communication line, this communication service also enables communication lines to be provided for users in developing nations or the like for a low cost.

### Citation List

### Non Patent Literature

[Non-Patent Literature 1] 3GPP TS 22.368 V11.3.0 (2011-09) 3rd Generation Partnership Project; Technical Specification Group Services and System Aspects; Service requirements for Machine-Type Communications (MTC); Stage 1 (Release 11)

3GPP Draft No. S2-101456 discusses the issue of signaling congestion in packet switched core networks, and discloses that congestion in the signalling network is caused by a high number of MTC Devices trying almost simultaneously: (1) to attach to the network or (2) to activate/modify/deactivate a connection. It is proposed to address congestion by: rejecting connection requests per APN; rejecting connection requests and attach requests per MTC Group; or providing a back-off time to the MTC Devices.

3GPP Technical Report No. 23.888 V2.0.0 evaluates architectural aspects and discusses general system improvements for providing support for MTC in 3GPP Release 11.

A paper titled "Overload Control Method for Synchronized MTC Traffic in GERAN" (Paiva R C D et al.; Vehicular Technology Conference (VTC FALL), 2011 IEEE) discusses some issues to be solved to enable a wide application of MTC services, especially those which could request connections in a synchronized manner. This paper proposes that devices connecting in a periodical manner request a future network access already during a previous connection.

EP 0 975 186 A2 discloses a cellular telecommunication system in which bursts of additional bandwidth (e.g. one or more supplemental channels or a channel having variable bandwidth) are assigned to users (e.g. high-speed data users). A request for assignment of additional bandwidth may be an initial request, a continuation request for an ongoing burst, or a retry requests after a previously rejected request. In any case, it is determined whether to grant or reject the request. If the request is rejected, instructions are given to submit a retry request after a specified back-off time.

### Technical Problem

However, when the communication service is provided for the users to allow them to use the plurality of communication terminals with the contract for using the single communication line, if one communication terminal exclusively uses the line or uses the line for a long time, the opportunities for the other communication terminals or other users to communicate decreases. Further, since the number of M2M devices managed by one company or the like is large in the M2M communication, if one communication terminal exclusively uses the line or uses the line for a long time, a large number of communication terminals lose the opportunity to communicate, which increases the severity of the problem stated above.

### Summary of Invention

The present invention provides a control apparatus, a communication system, a communication apparatus, a communication method, and a program as disclosed in the appended independent claims.

A control apparatus according to a first exemplary aspect of the present invention includes: monitor means for monitoring statuses of connection of a plurality of communication apparatuses where a synchronous communication is limited to a network; determination means for determining, upon receiving from a first communication apparatus included in the plurality of communication apparatuses a connection request message that requests a connection to the network, whether the first communication apparatus can be connected to the network according to the statuses of the connection of the plurality of communication apparatuses to the network; and communication means for notifying, when it is determined in the determination means that the connection of the first communication apparatus to the network is unavailable, the first communication apparatus of a determination result indicating that the connection is unavailable and a timing at which the connection request message will be transmitted next time, wherein the communication means is configured to transmit, to the first communication apparatus, when it is determined in the determination means that the first communication apparatus that operates as a representative apparatus among the plurality of communication apparatuses where the synchronous communication is limited can be connected to the network, a communication timing of the first communication apparatus and a message indicating a communication timing of another communication apparatus included in the plurality of communication apparatuses.

A communication system according to a second exemplary aspect of the present invention includes: a plurality of communication apparatuses where a synchronous communication is limited; and a control apparatus that monitors statuses of connection of the plurality of communication apparatuses to a network, and upon receiving from a first communication apparatus included in the plurality of communication apparatuses a connection request message that requests a connection to the network, determines whether the first communication apparatus can be connected to the network according to the statuses of the connection of the plurality of communication apparatuses to the network, and when it is determined that the connection of the first communication apparatus to the network is unavailable, notifies the first communication apparatus of a determination result indicating that the connection is unavailable and a timing at which the connection request message will be transmitted next time; wherein the first communication apparatus is configured to operate as a representative apparatus among the plurality of communication apparatuses where the synchronous communication is limited and when it is determined that the first communication apparatus can be connected to the network, the first communication apparatus is configured to transmit, to the control apparatus a message for requesting an acquisition of a communication timing of the first communication apparatus and a communication timing of another communication apparatus included in the plurality of communication apparatuses; and wherein the control apparatus is configured to transmit, to the first communication apparatus that operates as the representative apparatus, the message indicating the communication timing of the communication apparatus that operates as the representative apparatus and the communication timing of the other communication apparatuses.

A communication apparatus according to a third exemplary aspect of the present invention is a communication apparatus in which a synchronous communication with a plurality of communication apparatuses is limited, the communication apparatus including: communication means for transmitting a connection request message that requests a connection to a network; and adjustment means for performing, when it is determined in a control apparatus arranged in the network that the connection to the network is unavailable according to the statuses of the connection of the plurality of communication apparatuses to the network, processing for re-connection to the network according to a timing at which the connection request message will be transmitted next time, the notification of the timing being sent from the control apparatus; wherein the communication apparatus is configured to operate as a representative apparatus among the plurality of communication apparatuses where the synchronous communication is limited, and wherein when it is determined that the communication apparatus can be connected to the network, the communication means is configured to transmit, to the control apparatus, a message for requesting an acquisition of a communication timing of the communication apparatus and a communication timing of another communication apparatus included in the plurality of communication apparatuses and the communication means is configured to receive the message indicating the communication timing of the communication apparatus that operates as the representative apparatus and the communication timing of the other communication apparatuses.

A communication method according to a fourth exemplary aspect of the present invention includes: monitoring statuses of connection of a plurality of communication apparatuses where a synchronous communication is limited to a network; determining, upon receiving from a first communication apparatus included in the plurality of communication apparatuses a connection request message that requests a connection to the network, whether the first communication apparatus can be connected to the network according to the statuses of the connection of the plurality of communication apparatuses to the network; and notifying, when it is determined that the connection of the first communication apparatus to the network is unavailable, the first communication apparatus of a determination result indicating that the connection is unavailable and a timing at which the connection request message will be transmitted next time; and transmitting, to the first communication apparatus, when it is determined that the first communication apparatus that operates as a representative apparatus among the plurality of communication apparatuses where the synchronous communication is limited can be connected to the network, a communication timing of the first communication apparatus and a message indicating a communication timing of another communication apparatus included in the plurality of communication apparatuses.

A program according to a fifth exemplary aspect of the present invention causes a computer to execute the following steps of: monitoring statuses of connection of a plurality of communication apparatuses where a synchronous communication is limited to a network; determining, upon receiving from a first communication apparatus included in the plurality of communication apparatuses a connection request message that requests a connection to the network, whether the first communication apparatus can be connected to the network according to the statuses of the connection of the plurality of communication apparatuses to the network; and notifying, when it is determined that the connection of the first communication apparatus to the network is unavailable, the first communication apparatus of a determination result indicating that the connection is unavailable and a timing at which the connection request message will be transmitted next time; and transmitting, to the first communication apparatus, when it is determined that the first communication apparatus that operates as a representative apparatus among the plurality of communication apparatuses where the synchronous communication is limited can be connected to the network, a communication timing of the first communication apparatus and a message indicating a communication timing of another communication apparatus included in the plurality of communication apparatuses.

### Advantageous Effects of Invention

According to the present invention, it is possible to provide a control apparatus, a communication system, a communication apparatus, a communication method, and a program capable of allocating communication opportunities efficiently and equally.

### Brief Description of Drawings

Fig. 1 is a configuration diagram of a control apparatus according to a first exemplary embodiment;
Fig. 2 is a configuration diagram of a communication system according to a second exemplary embodiment;
Fig. 3 is a configuration diagram of an M2M device according to the second exemplary embodiment;
Fig. 4 is a view showing a flow of processing for connecting the M2M device according to the second exemplary embodiment;
Fig. 5 is a view showing a flow of processing for connecting the M2M device according to the second exemplary embodiment;
Fig. 6 is a view showing a flow of processing for connecting an M2M device according to a third exemplary embodiment;
Fig. 7 is a view showing a flow of processing for connecting an M2M device according to a fourth exemplary embodiment;
Fig. 8A is a view showing a flow of processing for connecting an M2M device according to a fifth exemplary embodiment;
Fig. 8B is a view showing a flow of processing for connecting the M2M device according to the fifth exemplary embodiment;
Fig. 9 is a view showing a flow of processing for communicating with a neighboring M2M device executed when an M2M device is activated according to a sixth exemplary embodiment; and
Fig. 10 is a view showing a flow of processing for acquiring a communication timing according to the sixth exemplary embodiment.

### Description of Embodiments

The first to fifth exemplary embodiment does not fall under the scope of the claims.

### (First exemplary embodiment)

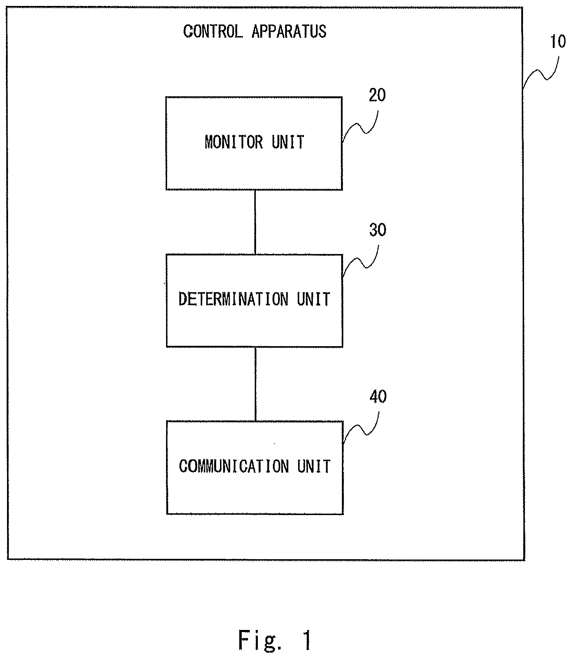

Hereinafter, with reference to the drawings, exemplary embodiments of the present invention will be described. A control apparatus 10 shown in Fig. 1 includes a monitor unit 20, a determination unit 30, and a communication unit 40.

The control apparatus 10 is an information processing apparatus (e.g., a server apparatus). The control apparatus 10 performs communication with a communication apparatus through, for example, a network. The communication apparatus may be, for example, a mobile telephone terminal, a smartphone, a tablet terminal, a personal computer, or an M2M device.

The monitor unit 20 monitors the statuses of the connection of a plurality of communication apparatuses to the network where a synchronous communication is limited. The plurality of communication apparatuses in which the synchronous communication is limited are, for example, communication apparatuses capable of performing communication using a single communication line for which there is a contract for using, in which the number of communication apparatuses that can concurrently perform communication with the contract for using the single communication line is predetermined. The number of communication apparatuses that can concurrently perform communication with the contract for using the single communication line may be one or a plurality thereof. Further, the plurality of communication apparatuses where the synchronous communication is limited may also be called a plurality of communication apparatuses that perform asynchronous communication. Further, a set of the plurality of communication apparatuses where the synchronous communication is limited may also be called an asynchronous communication group.

The state in which the communication apparatus is connected to the network is a state in which the communication apparatus is allowed to perform communication through the network.

The determination unit 30 receives a connection request message that requests connection to the network transmitted from a communication apparatus included in the plurality of communication apparatuses. The determination unit 30 determines whether the communication apparatus that has transmitted the connection request message can be connected to the network according to the statuses of the connection of the plurality of communication apparatuses to the network. When the number of the communication apparatuses which have already been connected to the network is larger than a predetermined number, for example, the determination unit 30 rejects the connection of the communication apparatus that has transmitted the connection request message to the network. The number of the communication apparatuses which have already been connected to the network is smaller than a predetermined number or none of the communication apparatuses has been connected to the network, the determination unit 30 allows the connection of the communication apparatus that has transmitted the connection request message to the network.

The communication apparatus may transmit the connection request message to the network when, for example, a power supply of the communication apparatus is turned on. Alternatively, the communication apparatus may be in a state in which it is detached from the network since the communication apparatus has not performed communication for a certain period of time and then transmit the connection request message to the network to re-start the communication.

When it is determined in the determination unit 30 that a connection to the network of the communication apparatus that has transmitted the connection request message is unavailable, the communication unit 40 notifies the communication apparatus that has transmitted the connection request message of the determination result indicating that the connection is unavailable and a transmission timing at which the connection request message is to be transmitted next time. The communication unit 40 may transmit one message including the determination result and the transmission timing to the communication apparatus. Otherwise, the communication unit 40 may transmit the determination result to the communication apparatus separately from transmitting the transmission timing thereto.

The transmission timing may be determined in the determination unit 30 or may be determined in the communication unit 40. When the number of communication apparatuses that can be connected to the network in one asynchronous communication group is one, the determination unit 30 or the communication unit 40 performs control to prevent a plurality of communication apparatuses from being concurrently connected to the network. For example, where it is determined that the connection of the communication apparatus to the network is unavailable, the determination unit 30 or the communication unit 40 determines the timing at which the communication apparatus transmits the connection request message next time in consideration of the timing at which the communication apparatus that is currently connected to the network is detached from the network. Further, the determination unit 30 may calculate, as needed, upon receiving a request for connection to the network from a new communication apparatus, a network detach timing of the communication apparatus that is currently connected to the network and notify the new communication apparatus of the detach timing through the communication unit 40. The calculation of the detach timing may be carried out in the communication unit 40.

As described above, by using the control apparatus 10 shown in Fig. 1, it is possible to determine whether to allow the connection of the communication apparatus that requests the connection to the network according to the status of connection of another communication apparatus to the network. It is therefore possible to achieve asynchronous communication in the plurality of communication apparatuses.

Further, when it is determined that the connection to the network is unavailable, the control apparatus 10 notifies the communication apparatus of the timing at which the next connection request message is to be transmitted, thereby controlling the schedule of connection of the plurality of communication apparatuses to the network. Further, the scheduling of connection of the plurality of communication apparatuses to the network is performed by the control apparatus arranged in the network, whereby it is possible to consider the statuses of connection of other communication apparatuses to the network or the number of communication apparatuses that request the connection to the network. It is therefore possible to efficiently give the plurality of communication apparatuses equal communication opportunities.

### (Second exemplary embodiment)

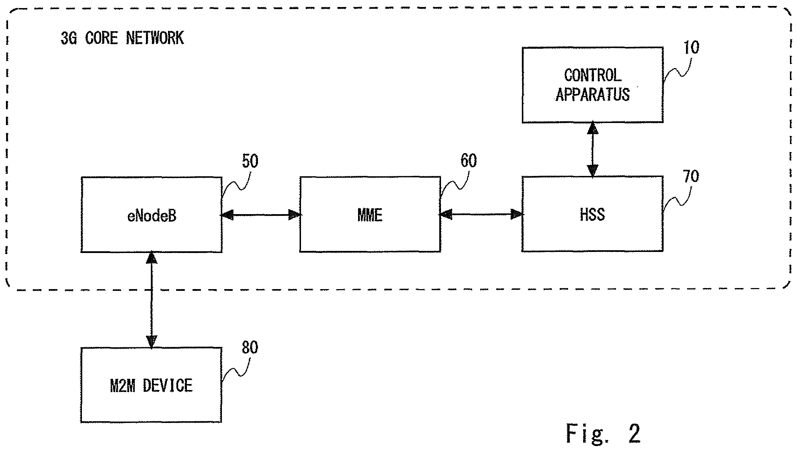

Next, with reference to Fig. 2, a configuration example of a communication system according to a second exemplary embodiment of the present invention will be described. In Fig. 2, a 3G core network is used as the network to which the communication apparatus is connected. The 3G core network is a network defined by the 3GPP and is a mobile network managed by a mobile communication provider or the like. Further, in Fig. 2, one example of the communication apparatus will be described using the M2M device 80. The M2M device may be referred to as a User Equipment (UE). The UE is a general term for the mobile communication terminal defined by the 3GPP.

While the description will be given hereinafter using the 3G core network, the network in which the control apparatus 10 is provided is not limited to the 3G core network and may instead be a network managed by, for example, a fixed communication provider or a mobile network that is different from the 3G core network and is managed by the mobile communication provider.

The 3G core network includes a control apparatus 10, an eNodeB 50, a Mobility Management Entity (MME) 60, and a Home Subscriber Server (HSS) 70. The eNodeB 50 is a base station used in the Long Term Evolution (LTE), which is a wireless network defined by the 3GPP. The eNodeB 50 performs communication with the M2M device 80 through a radio link. The eNodeB 50 is connected with the MME 60 in the 3G core network.

The MME 60 performs mobility management of the M2M device 80. For example, the MME 60 manages a location registration area where the M2M device 80 is positioned and calls the M2M device 80 when an incoming packet call is made to the M2M device 80. The location registration area may be referred to as, for example, a Tracking Area (TA).

Further, the MME 60 transmits or receives control information in the 3G core network. The control information is data used to secure the communication resources for the M2M device 80 or a call connection of the M2M device 80 and is also called C (Control) plane data. The communication resources are, for example, a buffer capacity, a memory capacity or the like used for the communication of the M2M device 80. Meanwhile, data such as audio data or image data that is exchanged between the communication apparatuses is also referred to as user data or U (User) plane data. The MME 60 is connected to the eNodeB 50 and the HSS 70 in the 3G core network.

The HSS 70 manages subscriber information on the M2M device 80. The subscriber information on the M2M device 80 is identification information on the M2M device 80, information on the service to which the M2M device 80 subscribes, an asynchronous communication group identifier or the like, which is information on the asynchronous communication group to which each M2M device 80 belongs. The HSS 70 may execute authentication processing using the subscriber information on the M2M device 80 when the M2M device 80 is connected to the 3G core network. The HSS 70 is connected with the control apparatus 10 and the MME 60 in the 3G core network.

As described with reference to Fig. 1, when the request to be connected to the 3G core network has been transmitted from the M2M device 80, the control apparatus 10 determines whether to allow the connection of the M2M device 80 to the 3G core network according to whether another communication apparatus that belongs to the asynchronous communication group has already been connected to the 3G core network. Further, the control apparatus 10 adjusts the timing of the connection of the communication apparatuses that belong to the asynchronous communication group to the 3G core network.

Further, while the control apparatus 10 has been described as being an apparatus different from the MME 60 or the HSS 70 in Fig. 2, the function of the control apparatus 10 may be included in the functions of the MME 60 or the HSS 70. Alternatively, some of the functions of the control apparatus 10 such as the function of the monitor unit 20, the determination unit 30, or the communication unit 40 may be included in the functions of the MME 60 or the HSS 70.

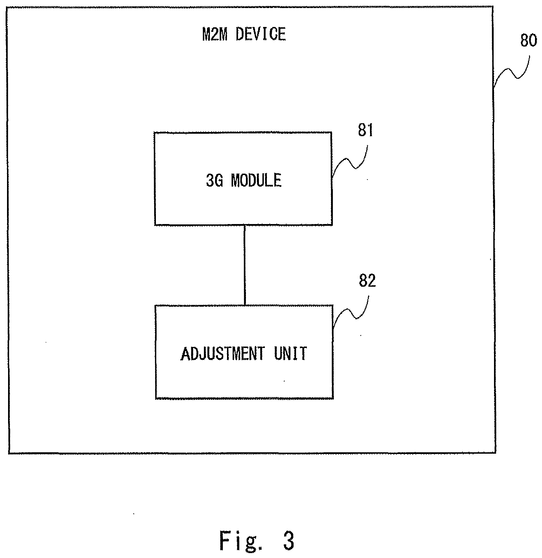

Next, with reference to Fig. 3, a configuration example of the M2M device 80 will be described. The M2M device 80 is a device that autonomously transmits data to a counterpart communication apparatus such as an application server without the intervention of user operations. The M2M device 80 may be, for example, an automatic vending machine having a communication function and may regularly notify the application server of the state in which products are stored. Further, the M2M device 80 is not limited to being an automatic vending machine and may instead be various other devices such as a home appliance in which a communication function is installed. Alternatively, the M2M device 80 may be a device such as a watch that is worn by a user in which a communication function is installed. In one more alternative, the M2M device 80 may be a smart meter or an environment monitoring sensor that monitors various kinds of information in which a communication function is installed.

The M2M device 80 includes a 3G module 81 and an adjustment unit 82. The 3G module 81 is a module used to communicate with the eNodeB 50 arranged in the 3G core network. For example, the 3G module 81 performs modulation processing or the like to transmit data to the eNodeB 50. Alternatively, the 3G module 81 performs processing for demodulating data transmitted from the eNodeB 50 and the like.

The adjustment unit 82 performs switching control of the connection to the 3G core network and the detach from the 3G core network. When the adjustment unit 82 receives a notification of the transmission timing of the connection request message from the control apparatus 10, for example, the adjustment unit 82 transmits the connection request message to the eNodeB 50 through the 3G module 81 based on the transmission timing that has been sent. Further, when the adjustment unit 82 receives from the control apparatus 10 a message that requests the detach from the 3G core network, the adjustment unit 82 transmits a message that accepts the detach to the eNodeB 50 through the 3G module 81 or transmits the message that requests the detach from the 3G core network from the M2M device 80.

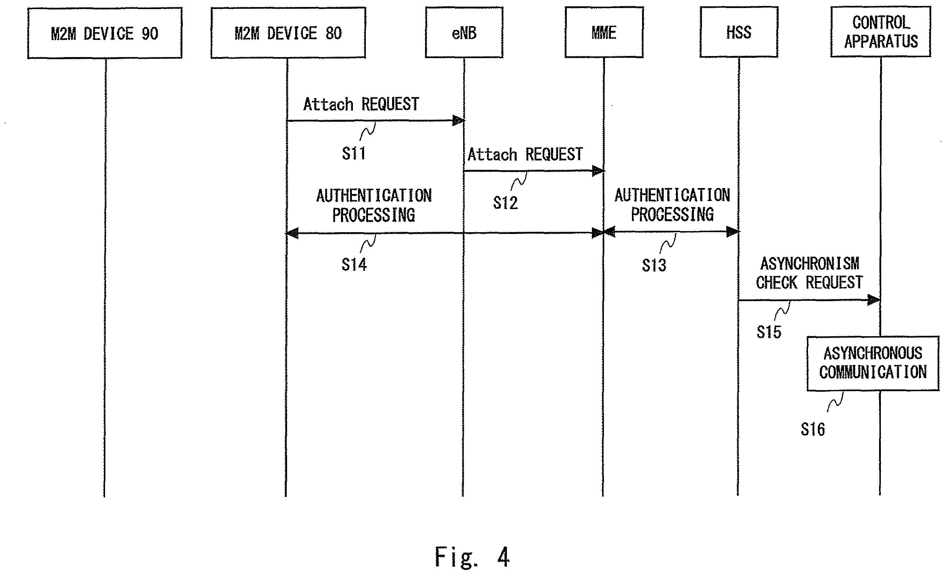

With reference next to Fig. 4, a flow of processing for connecting the M2M device 80 to the 3G core network will be described. First, the M2M device 80 transmits an Attach request message to the eNodeB 50 (it is shown as eNB in Fig. 4) (S11). The Attach request message corresponds to the connection request message. The M2M device 80 transmits the Attach request message to the eNodeB 50 to request connection to the 3G core network when, for example, power is turned on. The Attach request message includes subscriber information regarding the M2M device 80. Further, the state in which the M2M device is connected to the 3G core network may be referred to as an Attach state. Further, the state in which the M2M device is detached from the 3G core network may be referred to as a Detach state.

Next, the eNodeB 50 transmits the Attach request message transmitted to it from the M2M device 80 to the MME 60 (S12). Next, when the Attach request message is transmitted to the MME 60 from the eNodeB 50, authentication processing is performed between the M2M device 80 and the HSS 70. Specifically, the HSS 70 communicates a message regarding the authentication processing with the M2M device 80 through the MME 60 (S13 and S14). The HSS 70 performs the processing for authenticating the M2M device 80 using the subscriber information of the M2M device 80. The authentication processing of the M2M device 80 may be processing for determining whether the subscriber information sent from the M2M device 80 coincides with the subscriber information registered in the HSS 70. The authentication processing may be processing for determining whether to allow the connection of the M2M device 80 to the 3G core network.

Next, when the authentication processing of the M2M device 80 is completed in Steps S13 and S14, the HSS 70 transmits an asynchronism check request message to the control apparatus 10 to check whether another communication apparatus in the asynchronous communication group to which the M2M device 80 belongs is attached to the 3G core network (S15). The HSS 70 adds the group identifier of the asynchronous communication group to which the M2M device 80 belongs and a subscriber identifier of the M2M device 80 to the asynchronism check request message and then transmits this message.

When the number of communication apparatuses that can concurrently be attached to the 3G core network in the asynchronous communication group is one, for example, the control apparatus 10 determines whether there is a communication apparatus that has already been attached to the 3G core network besides the M2M device 80. When it is determined that there is no communication apparatus in the asynchronous communication group attached to the 3G core network, the control apparatus 10 permits the asynchronous communication of the M2M device 80 (S16). While the processing is ended in Step S16 in Fig. 4, the control apparatus 10 may transmit an Attach permission response message to the M2M device 80 after the asynchronous communication is permitted. Alternatively, the MME 60 may transmit the Attach permission response message to the M2M device 80 after the authentication for the M2M device 80 has been completed in Steps S13 and S14.

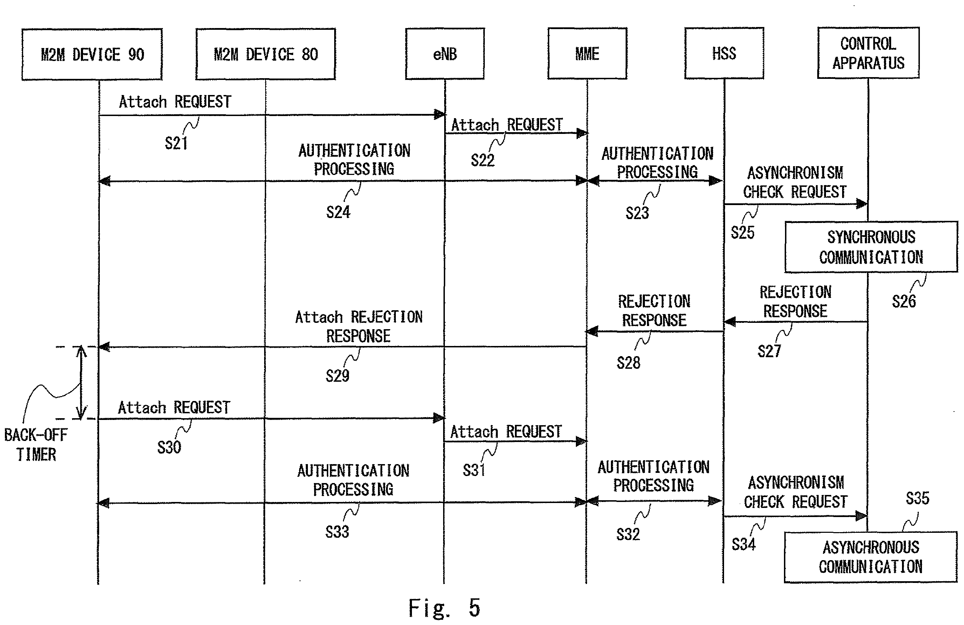

Referring next to Fig. 5, a flow of the processing when the connection request of the M2M device 90 is rejected will be described. It is assumed that the M2M device 80 is being connected to the 3G core network (Attach state) as described with reference to Fig. 4.

First, the M2M device 90 transmits the Attach request message to the eNodeB 50 (S21). Next, the eNodeB 50 transmits the Attach request message transmitted to it from the M2M device 90 to the MME 60 (S22).

Next, when the Attach request message is transmitted to the MME 60 from the eNodeB 50, the authentication processing is performed between the M2M device 90 and the HSS 70. Specifically, the HSS 70 communicates a message regarding the authentication processing with the M2M device 90 through the MME 60 (S23 and S24). The HSS 70 carries out processing for authenticating the M2M device 90 using the subscriber information of the M2M device 90.

Upon completion of the processing for authenticating the M2M device 90 in Steps S23 and S24, the HSS 70 transmits the asynchronism check request message to the control apparatus 10 to check whether another communication apparatus in the asynchronous communication group to which the M2M device 90 belongs has been attached to the 3G core network (S25).

It is assumed here that the number of communication apparatuses capable of being concurrently attached to the 3G core network in the asynchronous communication group is one and the M2M device 80 that belongs to the asynchronous communication group that is the same as the group to which the current M2M device 90 belongs is attached to the 3G core network.

In the above case, the control apparatus 10 determines that both the M2M device 90 and the M2M device 80 end up performing synchronous communication (S26). Therefore, the control apparatus 10 transmits a rejection response message that rejects the Attach of the M2M device 90 to the HSS 70 (S27). The rejection response message that the control apparatus 10 transmits includes a back-off timer value indicating the time that the M2M device 90 will wait before transmitting the next Attach request message and the subscriber identifier of the M2M device 90. Further, the HSS 70 transmits the rejection response message transmitted to it from the control apparatus 10 to the MME 60 (S28). The HSS 70 may transmit to the MME 60 the rejection response message obtained by adding the reason for rejecting the Attach of the M2M device 90 to the rejection response message transmitted to the HSS 70 from the control apparatus 10. The HSS 70 may add the reason for rejection that another communication apparatus in the asynchronous communication group that is the same as the group to which the M2M device 90 belongs has already been connected to the 3G core network.

Upon receiving the rejection response message transmitted from the HSS 70, the MME 60 transmits an Attach rejection response message to the M2M device 90 (S29). The MME 60 adds the reason for rejecting the Attach and the back-off timer value sent from the control apparatus 10 to the Attach rejection response message and then transmits this message to the M2M device 90.

Next, upon receiving the Attach rejection response message, the M2M device 90 starts the back-off timer. The M2M device 90 continues to activate the back-off timer for the period indicated by the back-off timer value included in the Attach rejection response message. Further, the M2M device 90 transmits the Attach request message to the eNodeB 50 again when the back-off timer expires (S30). Since Steps S30-S35 are similar to Steps S11-S16 in Fig. 4, the detailed descriptions thereof will be omitted.

In the following description, another example of the transmission timing of the response message in response to the Attach request message will be described. Specifically, the MME 60 may transmit the Attach permission response message to the M2M device 90 after the processing for authenticating the M2M device 90 has been completed in Steps S23 and S24.

To transmit the Attach permission response message after Steps S23 and S24, the MME 60 transmits the Attach rejection response message to the M2M device 90 in Step S29. Alternatively, the MME 60 may transmit a Detach request message to request the detach of the M2M device 90 from the 3G core network to the M2M device 90 instead of transmitting the Attach rejection response message. That is, the M2M device 90 receives the Attach permission response message after the completion of the authentication in Steps S23 and S24 and is connected to the 3G core network. Therefore, the MME 60 may transmit the Detach request message indicating the detach of the M2M device from the 3G core network to the M2M device 90. Further, the MME 60 may calculate the network detach timing of the M2M device 90 and then notify the M2M device 90 of the detach timing (the timing at which the M2M device 90 detaches from the network).

As described above, by using the communication system according to the second exemplary embodiment of the present invention, it is possible to control the timing when the M2M device is connected to the 3G core network. That is, when the M2M device in the asynchronous communication group has already been connected to the 3G core network, the control apparatus 10 is able to notify the M2M device rejected to perform Attach of the back-off timer in consideration of the timing when the M2M device that has already been connected to the 3G core network is detached from the 3G core network. Accordingly, the M2M device that has been rejected once to perform Attach has an opportunity to perform Attach again, whereby it is possible to secure communication opportunities. The control apparatus 10 is therefore able to give the M2M devices that belong to the asynchronous communication group equal opportunities to communicate.

### (Third exemplary embodiment)

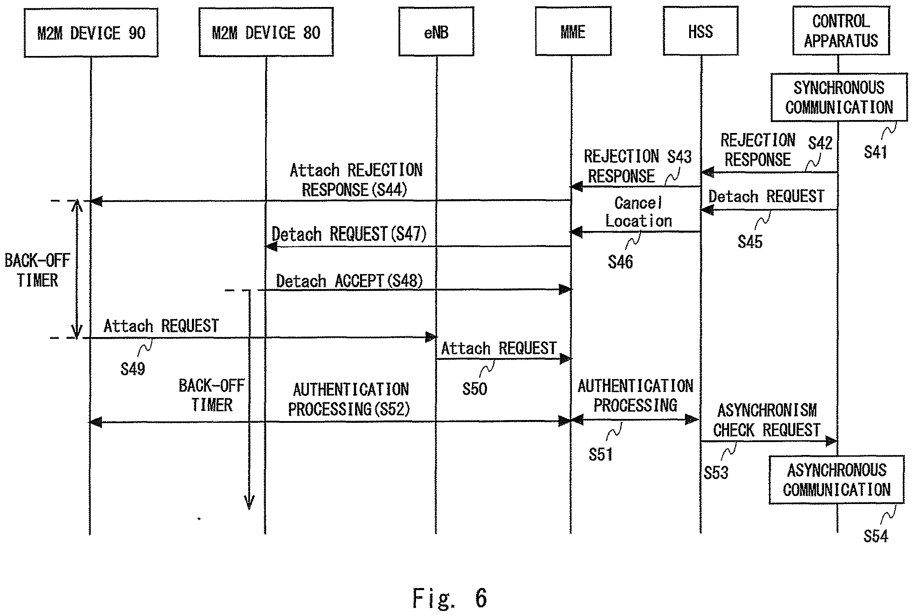

Next, with reference to Fig. 6, a flow of processing when the connection request of the M2M device 90 is rejected according to a third exemplary embodiment of the present invention will be described. It is assumed here that the M2M device 80 has been connected to the 3G core network (Attach state), as described above with reference to Fig. 4. Further, although not shown in Fig. 6, processing regarding the Attach request in Steps S21-S25 in Fig. 5 is executed before Step S41.

Since the M2M device 80 has already been connected to the network, when the control apparatus 10 receives the asynchronism check request message from the HSS 70, it is determined that both the M2M device 90 and the M2M device 80 end up performing synchronous communication (S41). Since Steps S42-S44 are similar to Steps S27-S29 in Fig. 5, the detailed descriptions thereof will be omitted.

The control apparatus 10 transmits the rejection response message to the M2M device 90 in Step S42 and transmits the Detach request message for the M2M device 80 to the HSS 70 (S45). The control apparatus 10 transmits the Detach request message to the M2M device 80 to detach the M2M device 80 which is in the Attach state from the 3G core network. The control apparatus 10 adds the subscriber identifier of the M2M device 80, the back-off timer value, and the reason for the disconnection or the detach to the Detach request message and then transmits this message. The reason for the disconnection or the detach may be, for example, "to cause another communication apparatus in the asynchronous communication group that is the same as the group to which the M2M device 80 belongs to be connected to the 3G core network".

Next, the HSS 70 transmits a Cancel Location message to the MME 60 (S46). The content of the Cancel Location message is similar to that of the Detach request message transmitted from the control apparatus 10 in Step S45. Next, the MME 60 transmits the Detach request message to the M2M device 80 (S47). The content of the Detach request message transmitted to the M2M device 80 from the MME 60 is similar to that of the Detach request message transmitted to the HSS 70 from the control apparatus 10.

Upon receiving the Detach request message, the M2M device 80 transmits a Detach accept message to the MME 60 to detach from the 3G core network (S48). Further, the M2M device 80 transmits the Detach accept message to the MME 60 and starts the back-off timer. The M2M device 80 transmits the Attach request message to the eNodeB 50 when the period of the back-off timer value sent in the Detach request message has passed and the back-off timer has expired.

Further, after the back-off timer that has been started upon the reception of the Attach rejection response message in Step S44 expires, the M2 device 90 transmits the Attach request message to the eNodeB 50 (S49). Since Steps S49-S54 are similar to Steps S30-S35 in Fig. 5, the detailed descriptions thereof will be omitted.

The control apparatus 10 sets the back-off timer value of the M2M device 90 sent in the rejection response message in Step S42 in such a way that the M2M device 90 is able to transmit the Attach request message after the M2M device 80 is detached from the 3G core network. For example, the control apparatus 10 estimates in advance the time at which the Detach request message is to be sent to the M2M device 80 and sets the back-off timer value in such a way that the back-off timer in the M2M device 90 expires after the elapse of the estimated time.

As described above, by using the control apparatus 10 according to the third exemplary embodiment of the present invention, it is possible to transmit an explicit message to request the detach of the M2M device 80 from the 3G core network to the M2M device 80 that has already been connected to the 3G core network. The control apparatus 10 is therefore able to shorten the back-off timer set in the M2M device 90 that has newly requested to be connected to the 3G core network. Therefore, the M2M device 90 is able to be connected to the 3G core network earlier than in the operation in the second exemplary embodiment.

### (Fourth exemplary embodiment)

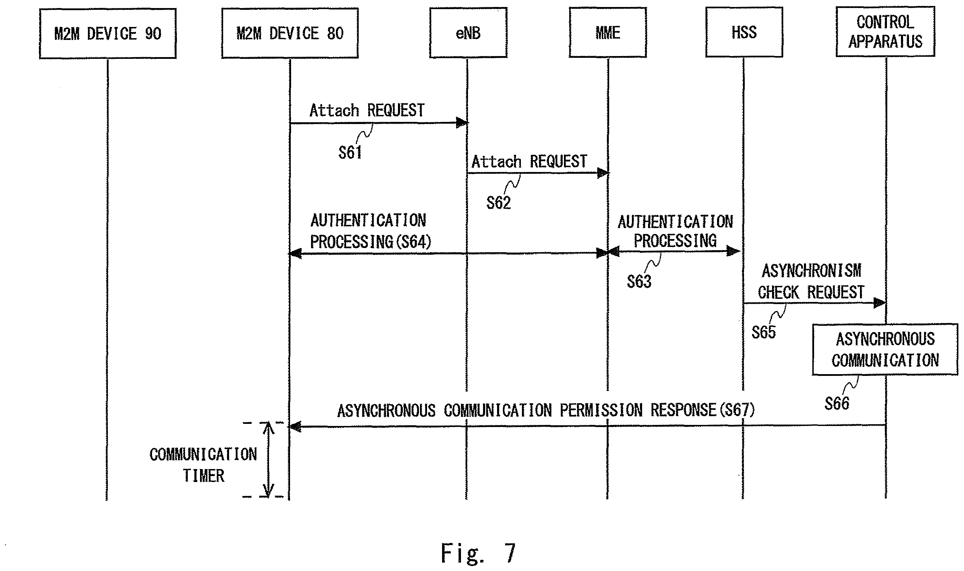

Next, with reference to Fig. 7, a flow of processing when the M2M device 80 is connected to the 3G core network according to a fourth exemplary embodiment of the present invention will be described. Since Steps S61-66 shown in Fig. 7 are similar to Steps S11-16 shown in Fig. 4, the detailed descriptions thereof will be omitted.

Since there is no M2M device that is connected to the 3G core network besides the M2M device 80 in Step S66, the control apparatus 10 determines that the M2M device 80 will perform the asynchronous communication. In this case, the control apparatus 10 transmits an asynchronous communication permission response message to the M2M device 80 (S67). At this time, the control apparatus 10 notifies the M2M device 80 of a communication time or a communication timer value to be allowed using the asynchronous communication permission response message (S67).

Upon receiving a notification of the communication time from the control apparatus 10, the M2M device 80 starts the communication timer for it to be connected to the 3 G core network until the communication time expires. The M2M device 80 may transmit, after the communication time has expired, a message for it to detach from the 3G core network to the MME 60. The message to detach from the 3G core network corresponds to the Detach request message or the Detach accept message. Alternatively, the control apparatus 10 may transmit the Detach request message to the M2M device 80 through the HSS 70 and the MME 60 at the timing when the communication time of the M2M device 80 has expired.

Further, when the connection to the 3G core network has been requested by the M2M device 90 before the communication time of the M2M device 80 expires, the control apparatus 10 may set the back-off timer value to be sent to the M2M device 90 in such a way that the M2M device 90 is able to transmit the Attach request message after the communication time of the M2M device 80 expires. That is, the control apparatus 10 may determine the back-off timer value to be sent to the M2M device 90 based on the remaining time before the communication time of the M2M device 80 expires.

As described above, by using the control apparatus 10 according to the fourth exemplary embodiment of the present invention, it is possible to notify the M2M device connected to the 3G core network of the time when the connection to the 3G core network is allowed. Accordingly, the control apparatus 10 sets the back-off timer value for the M2M device that will be newly connected to the 3G core network in consideration of the communication time allocated to the M2M device that has already been connected to the network, whereby it is possible to also give a communication opportunity to the M2M device that will be newly connected to the 3G core network.

### (Fifth exemplary embodiment)

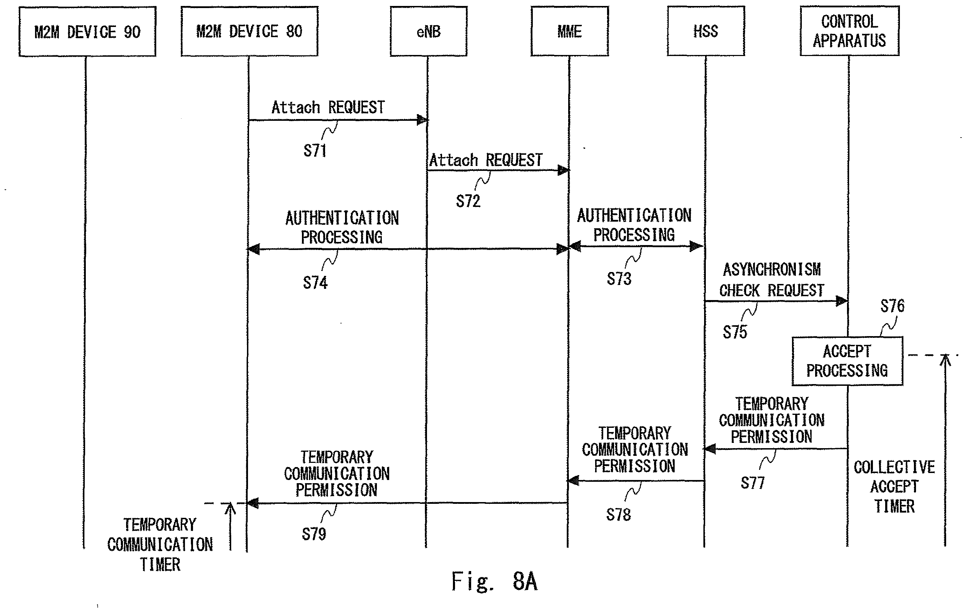

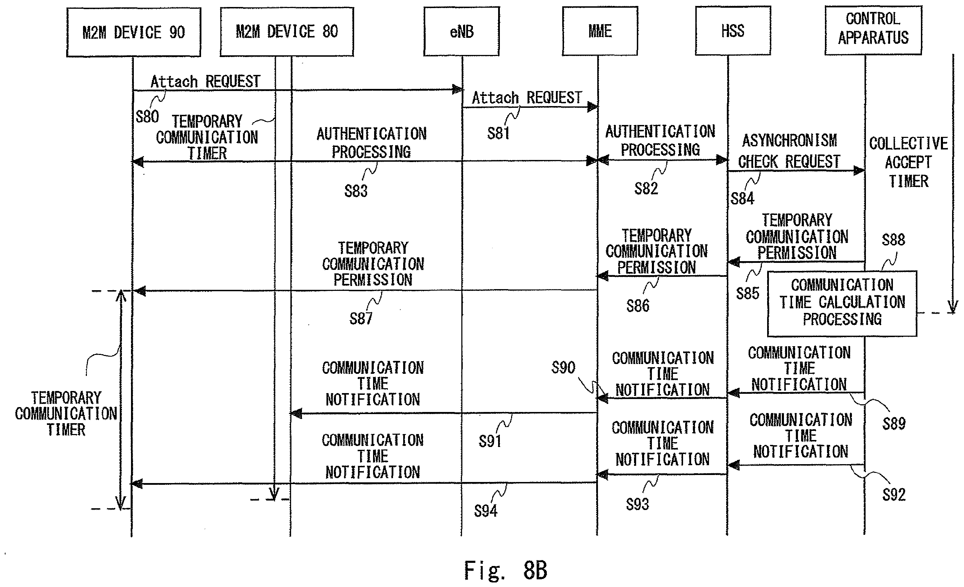

With reference next to Figs. 8A and 8B, a flow of Attach processing according to a fifth exemplary embodiment of the present invention will be described. First, the M2M device 80 transmits the Attach request message to the eNodeB 50 (S71). The Attach request message includes a temporary communication flag and the subscriber information regarding the M2M device 80. The temporary communication flag is a flag indicating a request for a temporary communication to receive a notification of the communication time determined in the control apparatus 10 in a state in which the M2M device 80 has not yet been connected to the 3G core network. The communication time determined in the control apparatus 10 indicates the time when the M2M device 80 is able to be kept to the Attach state. Further, the communication time determined in the control apparatus 10 indicates the timing or the time when the M2M device 80 next transmits the Attach request message.

Next, the eNodeB 50 transmits the Attach request message transmitted to it from the M2M device 80 to the MME 60 (S72). Since Steps S73-S75 are similar to Steps S13-S15 in Fig. 4, the detailed descriptions thereof will be omitted.

Upon receiving the asynchronism check request message including the temporary communication flag in Step S75, the control apparatus 10 starts processing for accepting the M2M device 80 (S76). The accept processing is processing for accepting the request for the temporary communication transmitted from the plurality of M2M devices. The control apparatus 10 executes the accept processing to calculate the communication time of the plurality of M2M devices. The control apparatus 10 starts a collective accept timer when the accept processing is started. The control apparatus 10 calculates the communication time of the M2M device that has requested the temporary communication before the collective accept timer expires. The period from the start of the collective accept timer to the expiration of the collective accept timer may be predetermined or may be dynamically changed while the collective accept timer is being activated according to the number of requests of the temporary communication.

When the collective accept timer is started, the control apparatus 10 transmits a temporary communication permission message to the HSS 70 (S77). The control apparatus 10 sends a notification of a temporary communication permission time and the subscriber identifier of the M2M device 80 using the temporary communication permission message. Next, the HSS 70 transmits the temporary communication permission message transmitted to it from the control apparatus 10 to the MME 60 (S78).

Next, the MME 60 transmits the temporary communication permission message transmitted to it from the HSS 70 to the M2M device 80 (S79). The MME 60 notifies the M2M device 80 of the temporary communication permission time determined in the control apparatus 10 using the temporary communication permission message. The M2M device 80 starts, upon receiving the temporary communication permission message, a temporary communication timer. The temporary communication timer expires when the temporary communication permission time specified by the temporary communication permission message expires.

Next, the M2M device 90 transmits the Attach request to the eNodeB 50 before the collective accept timer in the control apparatus 10 expires (S80). Similar to Step S71, the Attach request in Step S80 includes the temporary communication flag and the subscriber identification information of the M2M device 90. Since Steps S80-S84 are similar to Steps S71-75 in Fig. 8A, the detailed descriptions thereof will be omitted.

The control apparatus 10 accepts the temporary communication of the M2M device 90 upon receiving the asynchronism check request message including the temporary communication flag in Step S84 and transmits the temporary communication permission message to the HSS 70 (S85). Since Steps S85-S87 are similar to Steps S77-S79 in Fig. 8A, the detailed descriptions thereof will be omitted.

Next, when the collective accept timer expires, the control apparatus 10 calculates the communication time of each M2M device accepted while the collective accept timer is being activated (S88). In Fig. 8B, the control apparatus 10 calculates the communication time of each of the M2M devices 80 and 90. The communication time calculated by the control apparatus 10 includes a communication start time and a communication end time.

The control apparatus 10 transmits the communication time notification message including the communication time and the subscriber identifier of the M2M device 80 to the HSS 70 to notify the M2M device 80 of the communication time (S89). Next, the HSS 70 transmits the communication time message transmitted to it from the control apparatus 10 to the MME 60 (S90). Next, the MME 60 notifies the M2M device 80 of the communication time of the M2M device 80 determined in the control apparatus 10 using the communication time notification message (S91). The M2M device 80 is detached from the 3G core network when the temporary communication timer has expired after receiving the communication time notification message. Further, the M2M device 80 transmits the Attach request message to the eNodeB 50 at the communication start time specified in the communication time notification message and transmits the Detach request message to the eNodeB 50 at the communication end time specified in the communication time notification message.

Since processing Steps S92-S94 for notifying the M2M device 90 of the communication time are similar to Steps S89-S91, the detailed descriptions thereof will be omitted.

The accept processing in Step S76 will be further explained. The control apparatus 10 may determine, upon receiving the asynchronism check request message in which the temporary communication flag has been set, whether to permit the temporary communication according to whether a predetermined time has passed since the M2M device that requests the temporary communication had sent the previous temporary communication request. In this case, the control apparatus 10 may set a temporary communication non-permission timer for each M2M device and when the temporary communication request has been sent before the expiration of the temporary communication non-permission timer, the control apparatus 10 may reject the temporary communication request.

As described above, by using the control apparatus 10 according to the fifth exemplary embodiment of the present invention, the M2M device is able to unconditionally carry out the temporary communication regardless of the Attach state of the other M2M devices in the asynchronous communication group. Since the M2M device is able to unconditionally carry out the temporary communication, the M2M device can immediately accept the notification of the timing of the normal communication different from the temporary communication without setting the period determined by the back-off timer. Further, the control apparatus 10 is able to calculate the communication time of the plurality of M2M devices that have transmitted the connection request to the 3G core network in a predetermined period by using the collective accept timer. Accordingly, compared to the processing for calculating the back-off timer value for the M2M device every time the connection request is transmitted from the M2M device to the 3G core network, it is possible to collectively calculate the communication time of the plurality of M2M devices that have transmitted the connection request to the 3G core network in a predetermined period of time, whereby it is possible to efficiently execute processing for scheduling the connection of the plurality of M2M devices.

Further, since the M2M device receives a notification of the normal communication timing after the expiration of the collective accept timer since the collective accept timer is used in the control apparatus 10, there is an immediate effect that the M2M device is able to immediately receive the notification of the normal communication timing when the period of the collective accept timer is sufficiently smaller than the back-off period due to the Attach reject.

Further, while the flow of processing in which the M2M devices 80 and 90 set the temporary communication flag to transmit the Attach request message has been described in Figs. 8A and 8B, the M2M device 80 may not set the temporary communication flag. When the temporary communication flag is not set, the control apparatus 10 may determine whether a predetermined period of time has passed since the M2M devices 80 and 90 had previously transmitted the Attach request message, and when a predetermined period of time has passed, the control apparatus 10 may determine that the Attach request message transmitted from the M2M device 80 or 90 is the Attach request that requests the temporary communication and allow the temporary communication.

The control apparatus 10 may permit the temporary communication when the Attach request has been transmitted after a predetermined date or a predetermined time in a time scale instead of determining whether the predetermined period of time has passed. Further, the Attach request for requesting the temporary communication and the normal Attach request may be differentiated as follows. As one example, the Attach request transmitted in the communication time allowed by the control apparatus 10 may be the normal Attach request and the Attach request transmitted in a time other than the communication time may be the Attach request for requesting the temporary communication. Otherwise, the Attach request transmitted in the communication time allowed by the control apparatus 10 may be the Attach request for requesting the temporary communication and the Attach request transmitted in a time other than the communication time may be the normal Attach request.

### (Sixth exemplary embodiment)

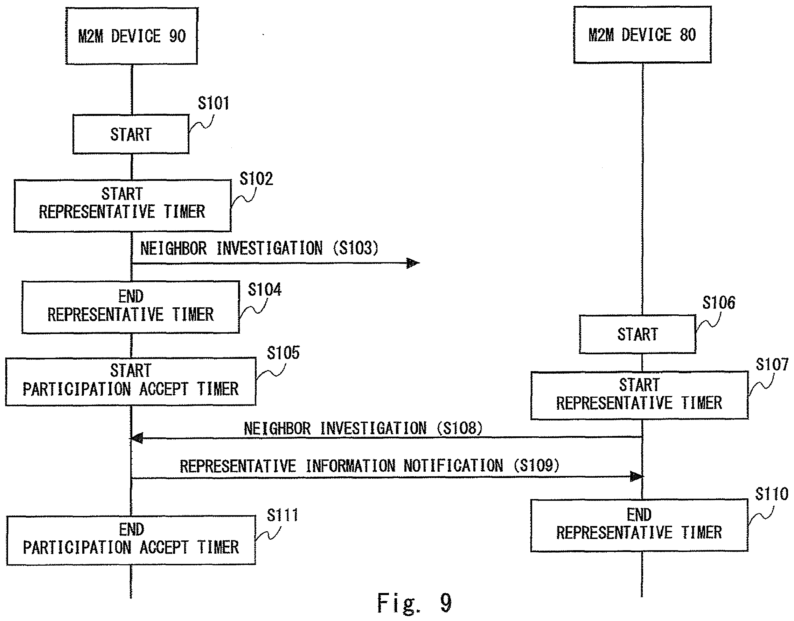

Next, with reference to Fig. 9, a flow of communication processing with a neighboring M2M device executed when the M2M device has been started according to a sixth exemplary embodiment of the present invention will be described. It is assumed in Fig. 9 that a representative M2M device acquires the communication timing of another M2M device in the asynchronous communication group instead of each M2M device that belongs to the asynchronous communication group acquiring the communication timing from the control apparatus 10.

First, the M2M device 90 is started by a user who has pressed, for example, a power supply switch (S101). Next, the M2M device 90 starts a representative timer immediately after the start of the M2M device 90 (S102). The representative timer is a timer used to determine the representative M2M device from among the plurality of M2M devices that belong to the asynchronous communication group. Next, the M2M device 90 transmits a neighbor investigation message to the neighboring M2M device while the representative timer is being activated (S103). The M2M device 90 may transmit the neighbor investigation message to an arbitrary neighboring M2M device without designating the destination. That is, the M2M device 90 may transmit the neighbor investigation message to the neighboring M2M device as a broadcast message. Alternatively, when the M2M device 90 includes information on the M2M device in the asynchronous communication group, it may designate the M2M device in the asynchronous communication group as a destination and transmit the neighbor investigation message to each M2M device.

When there is no M2M device that is being activated in the vicinity of the M2M device 90, the M2M device 90 does not receive a response message in response to the neighbor investigation message. Next, the M2M device 90 stops the representative timer after a predetermined time has passed (S104). Since the M2M device 90 has not received the response message from another M2M device in response to the neighbor investigation message, the M2M device 90 operates as the representative M2M device in the asynchronous communication group.

Next, the M2M device 90, which is the representative M2M device, starts a participation accept timer (S105). It is assumed here that the M2M device 80 has been started (S106) and the representative timer has been started (S107). The M2M device 80 is the M2M device that belongs to the asynchronous communication group that is the same as the group to which the M2M device 90 belongs. At this time, the M2M device 80 transmits the neighbor investigation message to the neighboring M2M device (S108).

Next, when the M2M device 90 receives the neighbor investigation message transmitted from the neighboring M2M device while the participation accept timer is being activated, the M2M device 90 transmits a representative information notification message to the M2M device 80 to notify the M2M device 80 that the M2M device 90 is the representative M2M device (S109).

Next, when the M2M device 80 receives the representative information notification message transmitted to it from the M2M device 90 as the response message in response to the neighbor investigation message while the representative timer is being activated, the M2M device 80 determines that the M2M device 80 is not the representative M2M device and forcibly stops the representative timer (S110).

Next, after the M2M device 90 starts the participation accept timer in Step S105, it stops the participation accept timer after a predetermined time has passed (S111).

Even when the M2M device 80 has been started and the neighbor investigation has been carried out before the expiration of the representative timer of the M2M device 90, processing similar to that in Steps S108 and S109 may be performed and the M2M device 90 may become a representative. That is, in this case, the M2M device 90 becomes a representative since it is the terminal that has performed the neighbor investigation for the first time before the representative timer expires.

Further, the method for determining the representative is not limited to the method shown in Fig. 9 and an arbitrary method may instead be used. The representative may be determined, for example, by exchanging information on a representative priority between M2M devices (information indicating whether one device can preferentially become the representative according to the specification of the device or the type of the service). Specifically, when one M2M device has received from another M2M device the information indicating that the other M2M device has a higher priority than the M2M device does as a response as a result of performing the neighbor investigation after the activation, the other M2M device becomes the representative. On the other hand, when it is revealed as the result of the neighbor investigation that one device has the highest priority, this device becomes the representative. Further, when the neighbor investigation message is received from an M2M device having a priority higher than the other M2M device after this device becomes the representative based on the exchange of the priority information, this device gives a right to become a representative to the M2M device that has transmitted the neighbor investigation message. In another example, the representative may be randomly determined by exchanging information between the M2M devices that have been activated within a predetermined period. Specifically, it is selected in each M2M device whether each M2M device becomes the representative using a random number. After the representative is determined, the result of selecting the representative is exchanged between the M2M devices to determine whether the representative has been determined. If the representative is duplicated or no representative is selected, the random selection operation is repeated until the representative is determined.

Further, in any method for determining the representative, the number of representative M2M devices is not limited to one and a plurality of M2M devices may instead be selected. The number of M2M devices may correspond to or not correspond to the number of devices that can perform synchronous communication allowed in the asynchronous communication group.

As described above, since the M2M devices perform communication with one another, it is possible to determine the representative M2M device from among the plurality of M2M devices that belong to the asynchronous communication group. In the following processing, the M2M device 90 acquires from the control apparatus 10 the communication timing of the M2M device 80 in addition to the communication timing of the M2M device 90 as the representative M2M device.

Wireless LAN communication may be used as the communication between the M2M device 90 and the M2M device 80. Alternatively, near-field communication such as infrared communication, Bluetooth (registered trademark), or Zigbee (registered trademark) may be used as the communication between the M2M device 90 and the M2M device 80.

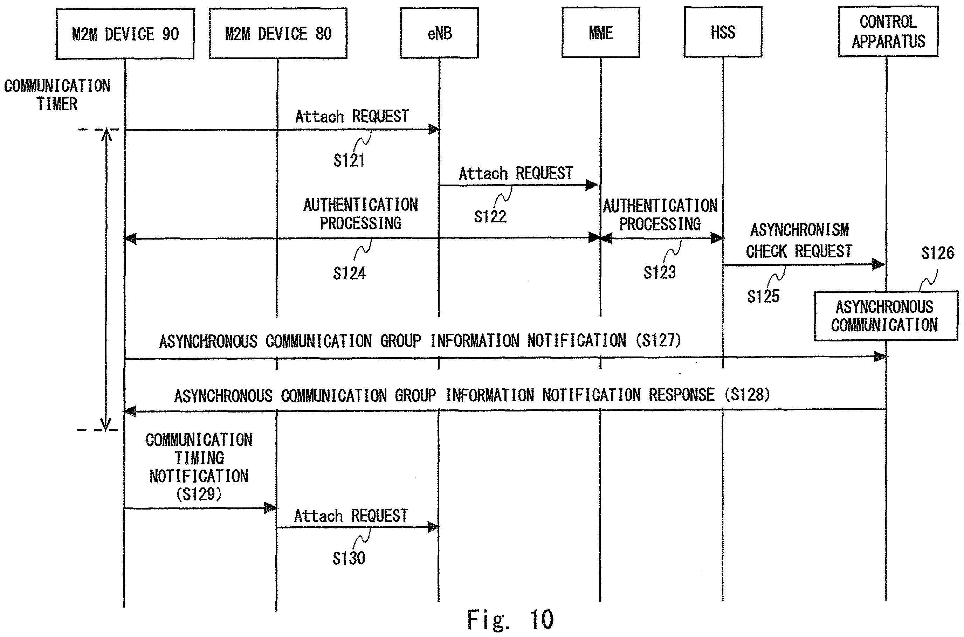

Next, with reference to Fig. 10, a flow of processing for acquiring the communication timing according to the fifth exemplary embodiment of the present invention will be described. In Fig. 10, it is assumed that the processing shown in Fig. 9 has been executed and the M2M device 90 is the representative M2M device.

First, the M2M device 90 transmits the Attach request message to the eNodeB 50 to be connected to the 3G core network (S121). Further, the M2M device 90 transmits the Attach request message and starts the communication timer. Since Steps S122-S126 are similar to Steps S12-S16 in Fig. 4 in the following description, the detailed descriptions thereof will be omitted.

Next, when the M2M device 90 is connected to the 3G core network and becomes the Attach state, it transmits an asynchronous communication group information notification message to the control apparatus 10 (S127). The M2M device 90 sets that the M2M device 90 and the M2M device 80 exist within the asynchronous communication group and then transmits the asynchronous communication group information notification message to the communication timing control apparatus 30.

Next, the control apparatus 10 transmits an asynchronous communication group information notification response message to the M2M device 90 as a response message in response to the asynchronous communication group information notification message (S128). The control apparatus 10 sets the communication timings of the M2M device 80 and the M2M device 90 to transmit the asynchronous communication group information notification response message to the M2M device 90.

The M2M device 90 stops the communication timer after receiving the asynchronous communication group information notification response message. Further, the M2M device 90 stops the communication timer and is detached from the 3G core network to make a transition to the Detach state. The M2M device 90 may stop the communication timer upon receiving the asynchronous communication group information notification response message or may stop the communication timer when a predetermined period of time has passed after the start of the communication timer. When the M2M device 90 stops the communication timer when a predetermined period of time has passed after the start of the communication timer, the M2M device 90 sets a time that is longer than the estimated time until the reception of the asynchronous communication group information notification response message after the transmission of the Attach request to start the communication timer.

Further, the M2M device 90 may continue (extend) the current Attach state according to the communication timing included in the asynchronous communication group information notification response message that has been received.

Next, the M2M device 90 transmits the communication timing notification message to the M2M device 80 (S129). The communication timing notification message is used to notify the M2M device 80 of the communication timing of the M2M device 80 set in the asynchronous communication group information notification response message.

The M2M device 90 may transmit the communication timing notification message to the M2M device 80 in the Attach state when the M2M device 90 is kept to be in the Attach state.

Next, the M2M device 80 transmits the Attach request message to the eNodeB 50 based on the communication timing that is set in the communication timing notification (S130).

As described above, in the communication according to the sixth exemplary embodiment of the present invention, the representative M2M device from among the plurality of M2M devices that belong to the asynchronous communication group acquires from the control apparatus 10 the communication timing of the representative M2M device and the communication timings of the other M2M devices.

The control apparatus 10 is therefore able to collectively calculate the communication timings of the plurality of M2M devices all at once instead of receiving the communication timing request for each of the plurality of M2M devices that belong to the asynchronous communication group to calculate the communication timings. The control apparatus 10 is therefore able to efficiently calculate the communication timing of each M2M device. Further, the number of times that the message is transmitted from the M2M device for the purpose of acquiring the communication timing decreases, whereby the processing load of the control apparatus 10 is also reduced.

Further, the representative M2M device makes an inquiry about the communication timings of the other M2M devices, whereby it is possible to reduce the amount of communication in the 3G core network.

Further, the identification information used to identify each M2M device in the M2M devices in Fig. 9 may be ISIM used as the subscriber identifier of the 3G network. Each M2M device sends a notification indicating that the M2M device has been started, the M2M device is the representative M2M device or the like using the ISIM.

The identification information used to identify each M2M device in the M2M devices in Fig. 9 may be a service terminal identifier different from the subscriber identifier of the 3G network. The service terminal identifier is an identifier that is managed by an external server device or the like disposed in an external network different from the 3G core network. In this case, in Step S127 shown in Fig. 10, for example, the M2M device 90 transmits the service terminal identifier to the control apparatus 10 to identify each M2M device using the asynchronous communication group information notification message. Therefore, the control apparatus 10 and the HSS 70 may acquire the service terminal identifier to identify each M2M device from the external server device in advance. The control apparatus 10 and the HSS 70 acquire the service terminal identifier from the external server device in advance, whereby it is possible to identify each M2M device even when the service terminal identifier is sent from the M2M device 90.

While the present invention has been described as a hardware configuration in the exemplary embodiments stated above, the present invention is not limited to the hardware configuration. The present invention may achieve the processing of the control apparatus by causing a central processing unit (CPU) to execute a computer program.

In the above examples, the program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Note that the present invention is not limited to the exemplary embodiments stated above and may be changed as appropriate without departing from the scope of the present invention.

While the present invention has been described with reference to the exemplary embodiments above, the present invention is not limited to the exemplary embodiments stated above. Various changes that can be understood by those skilled in the art may be made on the configurations and the details of the present invention within the scope of the present invention.

This application is based upon and claims the benefit of priority from Japanese Patent Application No. 2013-103219, filed on May 15, 2013.

### Reference Signs List

- 10: CONTROL APPARATUS
- 20: MONITOR UNIT
- 30: DETERMINATION UNIT
- 40: COMMUNICATION UNIT
- 50: eNodeB
- 60: MME
- 70: HSS
- 80: M2M DEVICE
- 81: 3G MODULE
- 82: ADJUSTMENT UNIT
- 90: M2M DEVICE

## Claims

1. A control apparatus (10) comprising:
monitor means (20) for monitoring statuses of connection of a plurality of communication apparatuses (80, 90) where a synchronous communication is limited to a network in which the control apparatus (10) is arranged, whereby the plurality of communication apparatuses (80, 90) form an asynchronous communication group in a different network;
determination means (30) for determining, upon receiving from a first communication apparatus (90) included in the plurality of communication apparatuses (80, 90) a connection request message that requests a connection to the network, whether the first communication apparatus (90) can be connected to the network according to the statuses of the connection of the plurality of communication apparatuses (80, 90) to the network; and
communication means (40) for notifying, when it is determined in the determination means (30) that the connection of the first communication apparatus (90) to the network is unavailable, the first communication apparatus (90) of a determination result indicating that the connection is unavailable and a timing at which the connection request message will be transmitted next time, wherein
the communication means (40) is configured to transmit, to the first communication apparatus (90), when it is determined in the determination means (30) that the first communication apparatus (90), that operates as a representative apparatus among the plurality of communication apparatuses (80, 90) in the network where the synchronous communication is limited, can be connected to the network, a communication timing of the first communication apparatus (90) and a message indicating a communication timing of another communication apparatus (80) included in the plurality of communication apparatuses (80, 90) to cause the first communication apparatus (90) to transmit the message indicating a communication timing of another communication apparatus (80) to the another communication apparatus (80)

2. The control apparatus (10) according to Claim 1, wherein the determination means (30) is configured to determine, when one or more plurality of the communication apparatuses included in the plurality of communication apparatuses (80, 90) has already been connected to the network, the connection of the first communication apparatus (90) to the network as unavailable.

3. The control apparatus (10) according to Claim 1 or 2, wherein when the connection of the first communication apparatus (90) to the network is determined to be unavailable in the determination means (30), the communication means (40) is configured to transmit a detach request message that requests to detach from the network to the communication apparatus that has already been connected to the network.

4. The control apparatus (10) according to Claim 3, wherein the communication means (40) is configured to transmit the detach request message to the communication apparatus that has already been connected to the network and transmit a timing at which the connection request message will be transmitted next time to the communication apparatus that has already been connected to the network.

5. The control apparatus (10) according to any one of Claims 1 to 4, wherein the determination means (30) is configured to allocate a communication allowable time to the first communication apparatus (90) when the connection of the first communication apparatus (90) to the network is allowed.

6. The control apparatus (10) according to any one of Claims 1 to 5, wherein the determination means (30) is configured to temporarily permit, when the connection request message is transmitted from at least one communication apparatus included in the plurality of communication apparatuses (80, 90), the connection to the network of the communication apparatus that has transmitted the connection request message and notify the communication apparatus that has been temporarily permitted to be connected to the network of the timing at which the connection request message will be transmitted next time.

7. The control apparatus (10) according to Claim 6, wherein the determination means (30) is configured to temporarily permit the connection to the network of the communication apparatus that has transmitted an initial connection request message in which a temporary communication flag has been set.

8. The control apparatus (10) according to Claim 7, wherein the determination means (30) is configured to determine, upon receiving the initial connection request message, whether to temporarily permit the connection to the network of the communication apparatus according to whether a predetermined period of time has passed since the communication apparatus last transmitted the initial connection request message.

9. The control apparatus (10) according to any one of Claims 1 to 5, wherein the determination means (30) is configured to determine, upon receiving the connection request message, whether to temporarily permit the connection to the network of the communication apparatus that has transmitted the connection request message according to whether a predetermined period of time has passed since the communication apparatus last transmitted the connection request message.

10. A communication system comprising:
a plurality of communication apparatuses (80, 90) where a synchronous communication is limited to a network, whereby the plurality of communication apparatuses (80, 90) form an asynchronous communication group in a different network; and a control apparatus (10) being arranged in the network and configured to monitor statuses of connection of the plurality of communication apparatuses (80, 90) to a network, and upon receiving from a first communication apparatus (90) included in the plurality of communication apparatuses (80, 90) a connection request message that requests a connection to the network,
determine whether the first communication apparatus (90) can be connected to the network according to the statuses of the connection of the plurality of communication apparatuses (80, 90) to the network, and when it is determined that the connection of the first communication apparatus (90) to the network is unavailable, notify the first communication apparatus (90) of a determination result indicating that the connection is unavailable and a timing at which the connection request message will be transmitted next time;
wherein the first communication apparatus (90) is configured to operate as a representative apparatus among the plurality of communication apparatuses (80, 90) in the network where the synchronous communication is limited and when it is determined that the first communication apparatus (90) can be connected to the network, the first communication apparatus (90) is configured to transmit, to the control apparatus (10) a message for requesting an acquisition of a communication timing of the first communication apparatus (90) and a communication timing of another communication apparatus (80) included in the plurality of communication apparatuses (80, 90); and
wherein the control apparatus (10) is configured to transmit, to the first communication apparatus (90) that operates as the representative apparatus, the message indicating the communication timing of the communication apparatus that operates as the representative apparatus and the communication timing of the other communication apparatuses (80, 90), the first communication apparatus (90) transmits the message indicating a communication timing of another communication apparatus (80) to the another communication apparatus (80) whereby the plurality of communication apparatuses (80, 90) form an asynchronous communication group in a different network (80, 90), the first communication apparatus (90) transmits the message indicating a communication timing of another communication apparatus (80) to the another communication apparatus (80) whereby the plurality of communication apparatuses (80, 90) form an asynchronous communication group in a different network (80, 90),
wherein the first communication apparatus (90) is further configured to transmit the message indicating a communication timing of another communication apparatus (80) to the another communication apparatus (80)

11. The communication system according to Claim 10, wherein the control apparatus (10) is configured to determine, when one or more plurality of communication apparatuses (80, 90) included in the plurality of communication apparatuses (80, 90) has already been connected to the network, the connection of the first communication apparatus (90) to the network as unavailable.

12. The communication system according to Claim 10 or 11, wherein when the connection to the network of the first communication apparatus (90) has been determined to be unavailable, the control apparatus (10) is configured to transmit a detach request message that requests to detach from the network to the communication apparatus that has already been connected to the network.

13. The communication system according to Claim 12, wherein the control apparatus (10) is configured to transmit the detach request message to the communication apparatus that has already been connected to the network and transmit a timing at which the connection request message will be transmitted next time to the communication apparatus that has already been connected to the network.

14. The communication system according to any one of Claims 10 to 13, wherein the control apparatus (10) is configured to allocate a communication allowable time to the first communication apparatus (90) when the connection of the first communication apparatus (90) to the network is allowed.

15. The communication system according to any one of Claims 10 to 14, wherein the control apparatus (10) is configured to temporarily permit, when the connection request message is transmitted from at least one communication apparatus included in the plurality of communication apparatuses (80, 90), the connection to the network of the communication apparatus that has transmitted the connection request message and notify the communication apparatus that has been temporarily permitted to be connected to the network of the timing at which the connection request message will be transmitted next time.

16. The communication system according to Claim 15, wherein the control apparatus (10) is configured to temporarily permit the connection to the network of the communication apparatus that has transmitted an initial connection request message including an identifier indicating a request for notification of the timing at which the connection request message will be transmitted next time.

17. The communication system according to Claim 16, wherein the control apparatus (10) is configured to determine, upon receiving the initial connection request message, whether to temporarily permit the connection to the network of the communication apparatus according to whether a predetermined period of time has passed since the communication apparatus last transmitted the initial connection request message.

18. The communication system according to any one of Claims 10 to 14, wherein the control apparatus (10) is configured to determine, upon receiving the connection request message, whether to temporarily permit the connection to the network of the communication apparatus that has transmitted the connection request message according to whether a predetermined period of time has passed since the communication apparatus last transmitted the connection request message.

19. The communication system according to any one of Claims 10 to 18, wherein the plurality of communication apparatuses (80, 90) are Machine to Machine, M2M, devices that autonomously perform communication.

20. The communication system according to any one of Claims 10 to 19, wherein the network is a network managed by a mobile communication provider.

21. A communication apparatus (90) in which a synchronous communication with a plurality of communication apparatuses (80, 90) is limited to a network, whereby the plurality of communication apparatuses (80, 90) form an asynchronous communication group in a different network, the communication apparatus (90) comprising:
communication means (40) for transmitting a connection request message that requests a connection to a network; and
adjustment means for performing, when it is determined in a control apparatus (10) arranged in the network that the connection to the network is unavailable according to the statuses of the connection of the plurality of communication apparatuses (80, 90) to the network, processing for re-connection to the network according to a timing at which the connection request message will be transmitted next time, the notification of the timing being sent from the control apparatus (10);
wherein the communication apparatus (90) is configured to operate as a representative apparatus among the plurality of communication apparatuses (80, 90) in the network where the synchronous communication is limited, and
wherein when it is determined that the communication apparatus (90) can be connected to the network, the communication means (40) is configured to transmit, to the control apparatus (10), a message for requesting an acquisition of a communication timing of the communication apparatus (90) and a communication timing of another communication apparatus (80) included in the plurality of communication apparatuses (80, 90) and the communication means (40) is configured to receive the message indicating the communication timing of the communication apparatus (90) that operates as the representative apparatus and the communication timing of the other communication apparatuses (80), the communication apparatus (90) is further configured to transmit the message indicating a communication timing of another communication apparatus (80) to the another communication apparatus (80).

22. A communication method performed by a control apparatus comprising:
monitoring statuses of connection of a plurality of communication apparatuses (80, 90) where a synchronous communication is limited to a network in which the control apparatus (10) is arranged, whereby the plurality of communication apparatuses (80, 90) form an asynchronous communication group in a different network;
determining, upon receiving from a first communication apparatus (90) included in the plurality of communication apparatuses (80, 90) a connection request message that requests a connection to the network, whether the first communication apparatus (90) can be connected to the network according to the statuses of the connection of the plurality of communication apparatuses (80, 90) to the network; and
notifying, when it is determined that the connection of the first communication apparatus (90) to the network is unavailable, the first communication apparatus (90) of a determination result indicating that the connection is unavailable and a timing at which the connection request message will be transmitted next time; and
transmitting, to the first communication apparatus (90), when it is determined that the first communication apparatus (90), that operates as a representative apparatus among the plurality of communication apparatuses (80, 90) in the network where the synchronous communication is limited, can be connected to the network, a communication timing of the first communication apparatus (90) and a message indicating a communication timing of another communication apparatus (80) included in the plurality of communication apparatuses (80, 90), the first communication apparatus (90) transmits the message indicating a communication timing of another communication apparatus (80) to the another communication apparatus (80).

23. A non-transitory computer readable medium storing a program that causes a computer of a control apparatus (10) to execute the following steps of:
monitoring statuses of connection of a plurality of communication apparatuses (80, 90) where a synchronous communication is limited to a network in which the control apparatus (10) is arranged, whereby the plurality of communication apparatuses (80, 90) form an asynchronous communication group in a different network;
determining, upon receiving from a first communication apparatus (90) included in the plurality of communication apparatuses (80, 90) a connection request message that requests a connection to the network, whether the first communication apparatus (90) can be connected to the network according to the statuses of the connection of the plurality of communication apparatuses (80, 90) to the network; and
notifying, when it is determined that the connection of the first communication apparatus (90) to the network is unavailable, the first communication apparatus (90) of a determination result indicating that the connection is unavailable and a timing at which the connection request message will be transmitted next time; and transmitting, to the first communication apparatus (90), when it is determined that the first communication apparatus (90), that operates as a representative apparatus among the plurality of communication apparatuses (80, 90) in the network where the synchronous communication is limited, can be connected to the network, a communication timing of the first communication apparatus (90) and a message indicating a communication timing of another communication apparatus (80) included in the plurality of communication apparatuses (80, 90) to cause the first communication apparatus (90) to transmit the message indicating a communication timing of another communication apparatus (80) to the another communication apparatus (80).

## Patentansprüche

1. Steuervorrichtung (10), die aufweist:
eine Überwachungseinrichtung (20) zum Überwachen der Verbindungszustände mehrerer Kommunikationsvorrichtungen (80, 90), wobei eine synchrone Kommunikation auf ein Netzwerk beschränkt ist, in dem die Steuervorrichtung (10) eingerichtet ist, wobei die mehreren Kommunikationsvorrichtungen (80, 90) eine asynchrone Kommunikationsgruppe in einem anderen Netzwerk bilden;
eine Bestimmungseinrichtung (30), um nach dem Empfang einer Verbindungsanforderungsnachricht, die eine Verbindung mit dem Netzwerk anfordert, von einer ersten Kommunikationsvorrichtung (90), die in den mehreren Kommunikationsvorrichtungen (80, 90) enthalten ist, gemäß den Verbindungszuständen der mehreren Kommunikationsvorrichtungen (80, 90) mit dem Netzwerk zu bestimmen, ob die erste Kommunikationsvorrichtung (90) mit dem Netzwerk verbunden werden kann; und
eine Kommunikationseinrichtung (40), um, wenn in der Bestimmungseinrichtung (30) bestimmt wird, dass die Verbindung der ersten Kommunikationsvorrichtung (90) mit dem Netzwerk nicht verfügbar ist, die erste Kommunikationsvorrichtung (90) über ein Bestimmungsergebnis, das angibt, dass die Verbindung nicht verfügbar ist, und eine Zeit, zu der die Verbindungsanforderungsnachricht das nächste Mal übertragen wird, zu benachrichtigen, wobei
die Kommunikationseinrichtung (40) konfiguriert ist, um, wenn in der Bestimmungseinrichtung (30) bestimmt wird, dass die erste Kommunikationsvorrichtung (90), die als eine repräsentative Vorrichtung von den mehreren Kommunikationsvorrichtungen (80, 90) in dem Netzwerk arbeitet, in dem die synchrone Kommunikation beschränkt ist, mit dem Netzwerk verbunden werden kann, eine Kommunikationszeit der ersten Kommunikationsvorrichtung (90) und eine Nachricht, die eine Kommunikationszeit einer anderen Kommunikationsvorrichtung (80) angibt, die in den mehreren Kommunikationsvorrichtungen (80, 90) enthalten ist, an die erste Kommunikationsvorrichtung (90) zu übertragen, um zu bewirken, dass die erste Kommunikationsvorrichtung (90) die Nachricht, die eine Kommunikationszeit einer anderen Kommunikationsvorrichtung (80) angibt, an die andere Kommunikationsvorrichtung (80) überträgt.

2. Steuervorrichtung (10) nach Anspruch 1, wobei die Bestimmungseinrichtung (30) konfiguriert ist, um, wenn eine oder mehrere der Kommunikationsvorrichtungen, die in den mehreren Kommunikationsvorrichtungen (80, 90) enthalten ist/sind, bereits mit dem Netzwerk verbunden ist/sind, zu bestimmen, dass die Verbindung der ersten Kommunikationsvorrichtung (90) mit dem Netzwerk nicht verfügbar ist.

3. Steuervorrichtung (10) nach Anspruch 1 oder 2, wobei, wenn die Verbindung der ersten Kommunikationsvorrichtung (90) mit dem Netzwerk in der Bestimmungseinrichtung (30) als nicht verfügbar bestimmt wird, die Kommunikationseinrichtung (40) konfiguriert ist, um eine Trennungsanforderungsnachricht, die eine Trennung von dem Netzwerk anfordert, an die Kommunikationsvorrichtung, die bereits mit dem Netzwerk verbunden ist, zu übertragen.

4. Steuervorrichtung (10) nach Anspruch 3, wobei die Kommunikationseinrichtung (40) konfiguriert ist, um die Trennungsanforderungsnachricht an die Kommunikationsvorrichtung, die bereits mit dem Netzwerk verbunden ist, zu übertragen und eine Zeit, zu der die Verbindungsanforderungsnachricht das nächste Mal übertragen wird, an die Kommunikationsvorrichtung, die bereits mit dem Netzwerk verbunden ist, zu übertragen.

5. Steuervorrichtung (10) nach einem der Ansprüche 1 bis 4, wobei die Bestimmungseinrichtung (30) konfiguriert ist, um eine zulässige Kommunikationszeit an die erste Kommunikationsvorrichtung (90) zuzuweisen, wenn die Verbindung der ersten Kommunikationsvorrichtung (90) mit dem Netzwerk zulässig ist.

6. Steuervorrichtung (10) nach einem der Ansprüche 1 bis 5, wobei die Bestimmungseinrichtung (30) konfiguriert ist, um, wenn die Verbindungsanforderungsnachricht von wenigstens einer Kommunikationsvorrichtung, die in den mehreren Kommunikationsvorrichtungen (80, 90) enthalten ist, übertragen wird, vorübergehend die Verbindung der Kommunikationsvorrichtung, welche die Verbindungsanforderungsnachricht übertragen hat, mit dem Netzwerk zu erlauben und die Kommunikationsvorrichtung, der vorübergehend erlaubt wurde, mit dem Netzwerk verbunden zu werden, über die Zeit, zu welcher die Verbindungsanforderungsnachricht das nächste Mal übertragen wird, zu benachrichtigen.

7. Steuervorrichtung (10) nach Anspruch 6, wobei die Bestimmungseinrichtung (30) konfiguriert ist, um die Verbindung der Kommunikationsvorrichtung, die eine erste Verbindungsanforderungsnachricht übertragen hat, in der eine temporäre Kommunikationsmarke gesetzt wurde, mit dem Netzwerk vorübergehend zu erlauben.

8. Steuervorrichtung (10) nach Anspruch 7, wobei die Bestimmungseinrichtung (30) konfiguriert ist, um nach dem Empfang der ersten Verbindungsanforderungsnachricht dementsprechend, ob eine vorgegebene Zeitspanne vergangen ist, seit die Kommunikationsvorrichtung zuletzt die erste Verbindungsanforderungsnachricht übertragen hat, zu bestimmen, ob die Verbindung der Kommunikationsvorrichtung mit dem Netzwerk vorübergehend erlaubt werden soll.

9. Kommunikationsvorrichtung (10) nach einem der Ansprüche 1 bis 5, wobei die Bestimmungseinrichtung (30) konfiguriert ist, um nach dem Empfang der Verbindungsanforderungsnachricht dementsprechend, ob eine vorgegebene Zeitspanne vergangen ist, seit die Kommunikationsvorrichtung zuletzt die Verbindungsanforderungsnachricht übertragen hat, zu bestimmen, ob die Verbindung der Kommunikationsvorrichtung, welche die Verbindungsanforderungsnachricht übertragen hat, mit dem Netzwerk vorübergehend erlaubt werden soll.

10. Kommunikationssystem, das aufweist:
mehrere Kommunikationsvorrichtungen (80, 90), wobei eine synchrone Kommunikation auf ein Netzwerk beschränkt ist, wobei die mehreren Kommunikationsvorrichtungen (80, 90) eine asynchrone Kommunikationsgruppe in einem anderen Netzwerk bilden; und
eine Steuervorrichtung (10), die in dem Netzwerk eingerichtet ist und konfiguriert ist, um nach dem Empfang einer Verbindungsanforderungsnachricht, die eine Verbindung mit dem Netzwerk anfordert, von einer ersten Kommunikationsvorrichtung (90), die in den mehreren Kommunikationsvorrichtungen (80, 90) enthalten ist, Verbindungszustände der mehreren Kommunikationsvorrichtungen (80, 90) mit einem Netzwerk zu überwachen, um gemäß den Verbindungszuständen der mehreren Kommunikationsvorrichtungen (80, 90) mit dem Netzwerk zu bestimmen, ob die erste Kommunikationsvorrichtung (90) mit dem Netzwerk verbunden werden kann; und, um, wenn bestimmt wird, dass die Verbindung der ersten Kommunikationsvorrichtung (90) mit dem Netzwerk nicht verfügbar ist, die erste Kommunikationsvorrichtung (90) über ein Bestimmungsergebnis, das angibt, dass die Verbindung nicht verfügbar ist, und eine Zeit, zu der die Verbindungsanforderungsnachricht das nächste Mal übertragen wird, zu benachrichtigen;
wobei die erste Kommunikationsvorrichtung (90) konfiguriert ist, um als eine repräsentative Vorrichtung von den mehreren Kommunikationsvorrichtungen (80, 90) in dem Netzwerk, in dem die synchrone Kommunikation beschränkt ist, zu arbeiten, und die erste Kommunikationsvorrichtung (90) konfiguriert ist, um, wenn bestimmt wird, dass die erste Kommunikationsvorrichtung (90) mit dem Netzwerk verbunden werden kann, eine Nachricht zur Anforderung einer Erlangung einer Kommunikationszeit der ersten Kommunikationsvorrichtung (90) und einer Kommunikationszeit einer anderen Kommunikationsvorrichtung (80), die in den mehreren Kommunikationsvorrichtungen (80, 90) enthalten ist, an die Steuervorrichtung (10) zu übertragen; und
wobei die Steuervorrichtung (10) konfiguriert ist, um die Nachricht, welche die Kommunikationszeit der Kommunikationsvorrichtung, die als die repräsentative Vorrichtung arbeitet, und die Kommunikationszeit der anderen Kommunikationsvorrichtungen (80, 90) an die erste Kommunikationsvorrichtung (90), die als die repräsentative Vorrichtung arbeitet, zu übertragen, wobei die erste Kommunikationsvorrichtung (90) die Nachricht, die eine Kommunikationszeit einer anderen Kommunikationsvorrichtung (80) angibt, an die andere Kommunikationsvorrichtung (80) überträgt, wobei die mehreren Kommunikationsvorrichtungen (80, 90) eine asynchrone Kommunikationsgruppe in einem anderen Netzwerk (80, 90) bilden, wobei die erste Kommunikationsvorrichtung (90) die Nachricht, die eine Kommunikationszeit einer anderen Kommunikationsvorrichtung (80) angibt, an die andere Kommunikationsvorrichtung überträgt, wobei die mehreren Kommunikationsvorrichtungen (80, 90) eine asynchrone Kommunikationsgruppe in einem anderen Netzwerk (80, 90) bilden,
wobei die erste Kommunikationsvorrichtung (90) ferner konfiguriert ist, um die Nachricht, die eine Kommunikationszeit einer anderen Kommunikationsvorrichtung (80) angibt, an die andere Kommunikationsvorrichtung (80) zu übertragen.

11. Kommunikationssystem nach Anspruch 10, wobei die Steuervorrichtung (10) konfiguriert ist, um, wenn eine oder mehrere der Kommunikationsvorrichtungen (80, 90), die in den mehreren Kommunikationsvorrichtungen (80, 90) enthalten ist/sind, bereits mit dem Netzwerk verbunden ist/sind, zu bestimmen, dass die Verbindung der ersten Kommunikationsvorrichtung (90) mit dem Netzwerk nicht verfügbar ist.

12. Kommunikationssystem nach Anspruch 10 oder 11, wobei, wenn die Verbindung der ersten Kommunikationsvorrichtung (90) mit dem Netzwerk als nicht verfügbar bestimmt wird, die Steuervorrichtung (10) konfiguriert ist, um eine Trennungsanforderungsnachricht, die eine Trennung von dem Netzwerk anfordert, an die Kommunikationsvorrichtung, die bereits mit dem Netzwerk verbunden ist, zu übertragen.

13. Kommunikationssystem nach Anspruch 12, wobei die Steuervorrichtung (10) konfiguriert ist, um die Trennungsanforderungsnachricht an die Kommunikationsvorrichtung, die bereits mit dem Netzwerk verbunden ist, zu übertragen und eine Zeit, zu der die Verbindungsanforderungsnachricht das nächste Mal übertragen wird, an die Kommunikationsvorrichtung, die bereits mit dem Netzwerk verbunden ist, zu übertragen.

14. Kommunikationssystem nach einem der Ansprüche 10 bis 13, wobei die Steuervorrichtung (10) konfiguriert ist, um eine zulässige Kommunikationszeit an die erste Kommunikationsvorrichtung (90) zuzuweisen, wenn die Verbindung der ersten Kommunikationsvorrichtung (90) mit dem Netzwerk zulässig ist.

15. Kommunikationssystem nach einem der Ansprüche 10 bis 14, wobei die Steuervorrichtung (10) konfiguriert ist, um, wenn die Verbindungsanforderungsnachricht von wenigstens einer Kommunikationsvorrichtung, die in den mehreren Kommunikationsvorrichtungen (80, 90) enthalten ist, übertragen wird, vorübergehend die Verbindung der Kommunikationsvorrichtung, welche die Verbindungsanforderungsnachricht übertragen hat, mit dem Netzwerk zu erlauben und die Kommunikationsvorrichtung, der vorübergehend erlaubt wurde, mit dem Netzwerk verbunden zu werden, über die Zeit, zu welcher die Verbindungsanforderungsnachricht das nächste Mal übertragen wird, zu benachrichtigen.

16. Kommunikationssystem nach Anspruch 15, wobei die Steuervorrichtung (10) konfiguriert ist, um die Verbindung der Kommunikationsvorrichtung, die eine erste Verbindungsanforderungsnachricht übertragen hat, die eine Kennung enthält, die eine Anforderung einer Benachrichtigung über die Zeit, zu der die Verbindungsanforderung das nächste Mal übertragen wird, enthält, mit dem Netzwerk vorübergehend zu erlauben.

17. Kommunikationssystem nach Anspruch 16, wobei die Steuervorrichtung (10) konfiguriert ist, um nach dem Empfang der ersten Verbindungsanforderungsnachricht dementsprechend, ob eine vorgegebene Zeitspanne vergangen ist, seit die Kommunikationsvorrichtung zuletzt die erste Verbindungsanforderungsnachricht übertragen hat, zu bestimmen, ob die Verbindung der Kommunikationsvorrichtung mit dem Netzwerk vorübergehend erlaubt werden soll.

18. Kommunikationssystem nach einem der Ansprüche 10 bis 14, wobei die Steuervorrichtung (10) konfiguriert ist, um nach dem Empfang der Verbindungsanforderungsnachricht dementsprechend, ob eine vorgegebene Zeitspanne vergangen ist, seit die Kommunikationsvorrichtung zuletzt die Verbindungsanforderungsnachricht übertragen hat, zu bestimmen, ob die Verbindung der Kommunikationsvorrichtung, welche die Verbindungsanforderungsnachricht übertragen hat, mit dem Netzwerk vorübergehend erlaubt werden soll.

19. Kommunikationssystem nach einem der Ansprüche 10 bis 18, wobei die mehreren Kommunikationsvorrichtungen (80, 90) Maschine-zu-Maschine-, M2M-, Vorrichtungen sind, welche die Kommunikation selbständig durchführen.

20. Kommunikationssystem nach einem der Ansprüche 10 bis 19, wobei das Netzwerk ein Netzwerk ist, das von einem Mobilkommunikationsdienstanbieter verwaltet wird.

21. Kommunikationsvorrichtung (90), wobei eine synchrone Kommunikation mit mehreren Kommunikationsvorrichtungen (80, 90) auf ein Netzwerk beschränkt ist, wobei die mehreren Kommunikationsvorrichtungen (80, 90) eine asynchrone Kommunikationsgruppe in einem anderen Netzwerk bilden, wobei die Kommunikationsvorrichtung (90) aufweist:
eine Kommunikationseinrichtung (40) zum Übertragen einer Verbindungsanforderungsnachricht, die eine Verbindung mit einem Netzwerk anfordert; und
eine Einstelleinrichtung, um, wenn in einer Steuervorrichtung (10), die in dem Netzwerk eingerichtet ist, gemäß den Verbindungszuständen der mehreren Kommunikationsvorrichtungen (80, 90) mit dem Netzwerk bestimmt wird, dass die Verbindung mit dem Netzwerk nicht verfügbar ist, gemäß einer Zeit, zu der die Verbindungsanforderungsnachricht das nächste Mal übertragen wird, eine Verarbeitung für eine Neuverbindung mit dem Netzwerk durchzuführen, wobei die Benachrichtigung über die Zeit von der Steuervorrichtung (10) gesendet wird;
wobei die Kommunikationsvorrichtung (90) konfiguriert ist, um als eine repräsentative Vorrichtung von den mehreren Kommunikationsvorrichtungen (80, 90) in dem Netzwerk, in dem die synchrone Kommunikation beschränkt ist, zu arbeiten, und
wobei, wenn bestimmt wird, dass die erste Kommunikationsvorrichtung (90) mit dem Netzwerk verbunden werden kann, die Kommunikationseinrichtung (40) konfiguriert ist, um eine Nachricht zur Anforderung einer Erlangung einer Kommunikationszeit der Kommunikationsvorrichtung (90) und einer Kommunikationszeit einer anderen Kommunikationsvorrichtung (80), die in den mehreren Kommunikationsvorrichtungen (80, 90) enthalten ist, an die Steuervorrichtung (10) zu übertragen, und die Kommunikationseinrichtung (40) konfiguriert ist, um die Nachricht, welche die Kommunikationszeit der Kommunikationsvorrichtung (90), die als die repräsentative Vorrichtung arbeitet, und die Kommunikationszeit der anderen Kommunikationsvorrichtung (80) angibt, zu empfangen, wobei die Kommunikationsvorrichtung (90) ferner konfiguriert ist, um die Nachricht, die eine Kommunikationszeit einer anderen Kommunikationsvorrichtung (80) angibt, an die andere Kommunikationsvorrichtung (80) zu übertragen.

22. Kommunikationsverfahren, das von einer Steuervorrichtung durchgeführt wird, das aufweist:
Überwachen der Verbindungszustände mehrerer Kommunikationsvorrichtungen (80, 90), wobei eine synchrone Kommunikation auf ein Netzwerk beschränkt ist, in dem die Steuervorrichtung (10) eingerichtet ist,
wobei die mehreren Kommunikationsvorrichtungen (80, 90) eine asynchrone Kommunikationsgruppe in einem anderen Netzwerk bilden;
nach dem Empfang einer Verbindungsanforderungsnachricht, die eine Verbindung mit dem Netzwerk anfordert, von einer ersten Kommunikationsvorrichtung (90), die in den mehreren Kommunikationsvorrichtungen (80, 90) enthalten ist, gemäß den Verbindungszuständen der mehreren Kommunikationsvorrichtungen (80, 90) mit dem Netzwerk Bestimmen, ob die erste Kommunikationsvorrichtung (90) mit dem Netzwerk verbunden werden kann; und
wenn bestimmt wird, dass die Verbindung der ersten Kommunikationsvorrichtung (90) mit dem Netzwerk nicht verfügbar ist, Benachrichtigen der ersten Kommunikationsvorrichtung (90) über ein Bestimmungsergebnis, das angibt, dass die Verbindung nicht verfügbar ist, und eine Zeit, zu der die Verbindungsanforderungsnachricht das nächste Mal übertragen wird; und
wenn bestimmt wird, dass die erste Kommunikationsvorrichtung (90), die als eine repräsentative Vorrichtung von den mehreren Kommunikationsvorrichtungen (80, 90) in dem Netzwerk, in dem die synchrone Kommunikation beschränkt ist, arbeitet, mit dem Netzwerk verbunden werden kann, Übertragen einer Kommunikationszeit der ersten Kommunikationsvorrichtung (90) und einer Nachricht, die eine Kommunikationszeit einer anderen Kommunikationsvorrichtung (80) angibt, die in den mehreren Kommunikationsvorrichtungen (80, 90) enthalten ist, an die erste Kommunikationsvorrichtung (90), wobei die erste Kommunikationsvorrichtung (90) die Nachricht, die eine Kommunikationszeit einer anderen Kommunikationsvorrichtung (80) angibt, an die andere Kommunikationsvorrichtung (80) überträgt.

23. Nichtflüchtiges computerlesbares Medium, das ein Programm speichert, das bewirkt, dass ein Computer einer Steuervorrichtung (10) die folgenden Schritte ausführt:
Überwachen der Verbindungszustände mehrerer Kommunikationsvorrichtungen (80, 90), wobei eine synchrone Kommunikation auf ein Netzwerk beschränkt ist, in dem die Steuervorrichtung (10) eingerichtet ist, wobei die mehreren Kommunikationsvorrichtungen (80, 90) eine asynchrone Kommunikationsgruppe in einem anderen Netzwerk bilden;
nach dem Empfang einer Verbindungsanforderungsnachricht, die eine Verbindung mit dem Netzwerk anfordert, von einer ersten Kommunikationsvorrichtung (90), die in den mehreren Kommunikationsvorrichtungen (80, 90) enthalten ist, gemäß den Verbindungszuständen der mehreren Kommunikationsvorrichtungen (80, 90) mit dem Netzwerk Bestimmen, ob die erste Kommunikationsvorrichtung (90) mit dem Netzwerk verbunden werden kann; und
wenn bestimmt wird, dass die Verbindung der ersten Kommunikationsvorrichtung (90) mit dem Netzwerk nicht verfügbar ist, Benachrichtigen der ersten Kommunikationsvorrichtung (90) über ein Bestimmungsergebnis, das angibt, dass die Verbindung nicht verfügbar ist, und eine Zeit, zu der die Verbindungsanforderungsnachricht das nächste Mal übertragen wird; und
wenn bestimmt wird, dass die erste Kommunikationsvorrichtung (90), die als eine repräsentative Vorrichtung von den mehreren Kommunikationsvorrichtungen (80, 90) in dem Netzwerk, in dem die synchrone Kommunikation beschränkt ist, arbeitet, mit dem Netzwerk verbunden werden kann, Übertragen einer Kommunikationszeit der ersten Kommunikationsvorrichtung (90) und einer Nachricht, die eine Kommunikationszeit einer anderen Kommunikationsvorrichtung (80) angibt, die in den mehreren Kommunikationsvorrichtungen (80, 90) enthalten ist, an die erste Kommunikationsvorrichtung (90), um zu bewirken, dass die erste Kommunikationsvorrichtung (90) die Nachricht, die eine Kommunikationszeit einer anderen Kommunikationsvorrichtung (80) angibt, an die andere Kommunikationsvorrichtung (80) überträgt.

## Revendications

1. Appareil de commande (10) comprenant :
un moyen de surveillance (20) pour surveiller des états de connexion d'une pluralité d'appareils de communication (80, 90) dans lesquels une communication synchrone est limitée à un réseau dans lequel l'appareil de commande (10) est agencé, moyennant quoi la pluralité d'appareils de communication (80, 90) forme un groupe de communication asynchrone dans un réseau différent ;
un moyen de détermination (30) pour déterminer, lors de la réception à partir d'un premier appareil de communication (90) inclus dans la pluralité d'appareils de communication (80, 90) d'un message de demande de connexion qui demande une connexion au réseau, si le premier appareil de communication (90) peut être connecté au réseau selon les états de la connexion de la pluralité d'appareils de communication (80, 90) au réseau ; et
un moyen de communication (40) pour notifier, lorsqu'il est déterminé dans le moyen de détermination (30) que la connexion du premier appareil de communication (90) au réseau n'est pas disponible, au premier appareil de communication (90) un résultat de détermination indiquant que la connexion n'est pas disponible et un instant auquel le message de demande de connexion sera transmis la prochaine fois, dans lequel
le moyen de communication (40) est configuré pour transmettre au premier appareil de communication (90), lorsqu'il est déterminé dans le moyen de détermination (30) que le premier appareil de communication (90), qui fonctionne comme un appareil représentatif parmi la pluralité d'appareils de communication (80, 90) dans le réseau où la communication synchrone est limitée, peut être connecté au réseau, un instant de communication du premier appareil de communication (90) et un message indiquant un instant de communication d'un autre appareil de communication (80) inclus dans la pluralité d'appareils de communication (80, 90) pour amener le premier appareil de communication (90) à transmettre le message indiquant un instant de communication d'un autre appareil de communication (80) à l'autre appareil de communication (80).

2. Appareil de commande (10) selon la revendication 1, dans lequel le moyen de détermination (30) est configuré pour déterminer, lorsqu'une ou plusieurs pluralités des appareils de communication inclus dans la pluralité d'appareils de communication (80, 90) a/ont été déjà connectée(s) au réseau, la connexion du premier appareil de communication (90) au réseau comme n'étant pas disponible.

3. Appareil de commande (10) selon la revendication 1 ou 2, dans lequel, lorsque la connexion du premier appareil de communication (90) au réseau est déterminée comme n'étant pas disponible dans le moyen de détermination (30), le moyen de communication (40) est configuré pour transmettre un message de demande de détachement qui demande de se détacher du réseau à l'appareil de communication qui a été déjà connecté au réseau.

4. Appareil de commande (10) selon la revendication 3, dans lequel le moyen de communication (40) est configuré pour transmettre le message de demande de détachement à l'appareil de communication qui a été déjà connecté au réseau et transmettre un instant auquel le message de demande de connexion sera transmis la prochaine fois à l'appareil de communication qui a été déjà connecté au réseau.

5. Appareil de commande (10) selon l'une quelconque des revendications 1 à 4, dans lequel le moyen de détermination (30) est configuré pour allouer un temps admissible de communication au premier appareil de communication (90) lorsque la connexion du premier appareil de communication (90) au réseau est autorisée.

6. Appareil de commande (10) selon l'une quelconque des revendications 1 à 5, dans lequel le moyen de détermination (30) est configuré pour permettre temporairement, lorsque le message de demande de connexion est transmis à partir d'au moins un appareil de communication inclus dans la pluralité de d'appareils de communication (80, 90), la connexion au réseau de l'appareil de communication qui a transmis le message de demande de connexion et notifier à l'appareil de communication dont la connexion au réseau a été temporairement permise, l'instant auquel le message de demande de connexion sera transmis la prochaine fois.

7. Appareil de commande (10) selon la revendication 6, dans lequel le moyen de détermination (30) est configuré pour permettre temporairement la connexion au réseau de l'appareil de communication qui a transmis un message de demande de connexion initiale dans lequel un drapeau de communication temporaire a été défini.

8. Appareil de commande (10) selon la revendication 7, dans lequel le moyen de détermination (30) est configuré pour déterminer, lors de la réception du message de demande de connexion initiale, s'il faut permettre temporairement la connexion au réseau de l'appareil de communication selon qu'une période de temps prédéterminée s'est écoulée depuis que l'appareil de communication a transmis pour la dernière fois le message de demande de connexion initiale.

9. Appareil de commande (10) selon l'une quelconque des revendications 1 à 5, dans lequel le moyen de détermination (30) est configuré pour déterminer, lors de la réception du message de demande de connexion, s'il faut permettre temporairement la connexion au réseau de l'appareil de communication qui a transmis le message de demande de connexion selon qu'une période de temps prédéterminée s'est écoulée depuis que l'appareil de communication a transmis pour la dernière fois le message de demande de connexion.

10. Système de communication comprenant :
une pluralité d'appareils de communication (80, 90) où une communication synchrone est limitée à un réseau, moyennant quoi la pluralité d'appareils de communication (80, 90) forme un groupe de communication asynchrone dans un réseau différent ; et
un appareil de commande (10) étant agencé dans le réseau et configuré pour surveiller des états de connexion de la pluralité d'appareils de communication (80, 90) à un réseau, et lors de la réception à partir d'un premier appareil de communication (90) inclus dans la pluralité d'appareils de communication (80, 90) d'un message de demande de connexion qui demande une connexion au réseau,
déterminer si le premier appareil de communication (90) peut être connecté au réseau selon les états de la connexion de la pluralité d'appareils de communication (80, 90) au réseau, et lorsqu'il est déterminé que la connexion du premier appareil de communication (90) au réseau n'est pas disponible, notifier au premier appareil de communication (90) un résultat de détermination indiquant que la connexion n'est pas disponible et un instant auquel le message de demande de connexion sera transmis la prochaine fois ;
dans lequel le premier appareil de communication (90) est configuré pour fonctionner comme un appareil représentatif parmi la pluralité d'appareils de communication (80, 90) dans le réseau où la communication synchrone est limitée et lorsqu'il est déterminé que le premier appareil de communication (90) peut être connecté au réseau, le premier appareil de communication (90) est configuré pour transmettre, à l'appareil de commande (10) un message pour demander une acquisition d'un instant de communication du premier appareil de communication (90) et d'un instant de communication d'un autre appareil de communication (80) inclus dans la pluralité d'appareils de communication (80, 90) ; et
dans lequel l'appareil de commande (10) est configuré pour transmettre, au premier appareil de communication (90) qui fonctionne comme l'appareil représentatif, le message indiquant l'instant de communication de l'appareil de communication qui fonctionne comme l'appareil représentatif et l'instant de communication des autres appareils de communication (80, 90), le premier appareil de communication (90) transmet le message indiquant un instant de communication d'un autre appareil de communication (80) à l'autre appareil de communication (80) moyennant quoi la pluralité d'appareils de communication (80, 90) forme un groupe de communication asynchrone dans un réseau différent (80, 90), le premier appareil de communication (90) transmet le message indiquant un instant de communication d'un autre appareil de communication (80) à l'autre appareil de communication (80) moyennant quoi la pluralité d'appareils de communication (80, 90) forme un groupe de communication asynchrone dans un réseau différent (80, 90),
dans lequel le premier appareil de communication (90) est en outre configuré pour transmettre le message indiquant un instant de communication d'un autre appareil de communication (80) à l'autre appareil de communication (80).

11. Système de communication selon la revendication 10, dans lequel l'appareil de commande (10) est configuré pour déterminer, lorsqu'une ou plusieurs pluralités d'appareils de communication (80, 90) inclus dans la pluralité d'appareils de communication (80, 90) a/ont été déjà connectée(s) au réseau, la connexion du premier appareil de communication (90) au réseau comme n'étant pas disponible.

12. Système de communication selon la revendication 10 ou 11, dans lequel, lorsque la connexion au réseau du premier appareil de communication (90) a été déterminée comme n'étant pas disponible, l'appareil de commande (10) est configuré pour transmettre un message de demande de détachement qui demande de se détacher du réseau à l'appareil de communication qui a été déjà connecté au réseau.

13. Système de communication selon la revendication 12, dans lequel l'appareil de commande (10) est configuré pour transmettre le message de demande de détachement à l'appareil de communication qui a été déjà connecté au réseau et transmettre un instant auquel le message de demande de connexion sera transmis la prochaine fois à l'appareil de communication qui a été déjà connecté au réseau.

14. Système de communication selon l'une quelconque des revendications 10 à 13, dans lequel l'appareil de commande (10) est configuré pour allouer un temps de communication admissible au premier appareil de communication (90) lorsque la connexion du premier appareil de communication (90) au réseau est autorisée.

15. Système de communication selon l'une quelconque des revendications 10 à 14, dans lequel l'appareil de commande (10) est configuré pour permettre temporairement, lorsque le message de demande de connexion est transmis à partir d'au moins un appareil de communication inclus dans la pluralité d'appareils de communication (80, 90), la connexion au réseau de l'appareil de communication qui a transmis le message de demande de connexion et notifier à l'appareil de communication qui a été temporairement permis à se connecter au réseau l'instant auquel le message de demande de connexion sera transmis la prochaine fois.

16. Système de communication selon la revendication 15, dans lequel l'appareil de commande (10) est configuré pour permettre temporairement la connexion au réseau de l'appareil de communication qui a transmis un message de demande de connexion initiale incluant un identifiant indiquant une demande de notification de l'instant auquel le message de demande de connexion sera transmis la prochaine fois.

17. Système de communication selon la revendication 16, dans lequel l'appareil de commande (10) est configuré pour déterminer, lors de la réception du message de demande de connexion initiale, s'il faut permettre temporairement la connexion au réseau de l'appareil de communication, selon qu'une période de temps prédéterminée s'est écoulée depuis que l'appareil de communication a transmis pour la dernière fois le message de demande de connexion initiale.

18. Système de communication selon l'une quelconque des revendications 10 à 14, dans lequel l'appareil de commande (10) est configuré pour déterminer, lors de la réception du message de demande de connexion, s'il faut permettre temporairement la connexion au réseau de l'appareil de communication qui a transmis le message de demande de connexion selon qu'une période de temps prédéterminée s'est écoulée depuis que l'appareil de communication a transmis pour la dernière fois le message de demande de connexion.

19. Système de communication selon l'une quelconque des revendications 10 à 18, dans lequel la pluralité d'appareils de communication (80, 90) sont des dispositifs Machine à Machine, M2M, qui effectuent une communication de manière autonome.

20. Système de communication selon l'une quelconque des revendications 10 à 19, dans lequel le réseau est un réseau géré par un fournisseur de communication mobile.

21. Appareil de communication (90) dans lequel une communication synchrone avec une pluralité d'appareils de communication (80, 90) est limitée à un réseau, moyennant quoi la pluralité d'appareils de communication (80, 90) forme un groupe de communication asynchrone dans un réseau différent, l'appareil de communication (90) comprenant :
un moyen de communication (40) pour transmettre un message de demande de connexion qui demande une connexion à un réseau ; et
un moyen de réglage pour effectuer, lorsqu'il est déterminé dans un appareil de commande (10) agencé dans le réseau que la connexion au réseau n'est pas disponible selon les états de la connexion de la pluralité d'appareils de communication (80, 90) au réseau, un traitement pour la reconnexion au réseau selon un instant auquel le message de demande de connexion sera transmis la prochaine fois, la notification de l'instant étant envoyée à partir de l'appareil de commande (10) ;
dans lequel l'appareil de communication (90) est configuré pour fonctionner comme un appareil représentatif parmi la pluralité d'appareils de communication (80, 90) dans le réseau où la communication synchrone est limitée, et
dans lequel, lorsqu'il est déterminé que l'appareil de communication (90) peut être connecté au réseau, le moyen de communication (40) est configuré pour transmettre à l'appareil de commande (10) un message pour demander une acquisition d'un instant de communication de l'appareil de communication (90) et d'un instant de communication d'un autre appareil de communication (80) inclus dans la pluralité d'appareils de communication (80, 90) et le moyen de communication (40) est configuré pour recevoir le message indiquant l'instant de communication de l'appareil de communication (90) qui fonctionne comme l'appareil représentatif et l'instant de communication des autres appareils de communication (80), l'appareil de communication (90) est en outre configuré pour transmettre le message indiquant un instant de communication d'un autre appareil de communication (80) à l'autre appareil de communication (80).

22. Procédé de communication effectué par un appareil de commande comprenant :
la surveillance d'états de connexion d'une pluralité d'appareils de communication (80, 90) où une communication synchrone est limitée à un réseau dans lequel l'appareil de commande (10) est agencé, moyennant quoi la pluralité d'appareils de communication (80, 90) forme un groupe de communication asynchrone dans un réseau différent ;
la détermination, lors de la réception à partir d'un premier appareil de communication (90) inclus dans la pluralité d'appareils de communication (80, 90) d'un message de demande de connexion qui demande une connexion au réseau, si le premier appareil de communication (90) peut être connecté au réseau selon les états de la connexion de la pluralité d'appareils de communication (80, 90) au réseau ; et
la notification, lorsqu'il est déterminé que la connexion du premier appareil de communication (90) au réseau n'est pas disponible, au premier appareil de communication (90) d'un résultat de détermination indiquant que la connexion n'est pas disponible et d'un instant auquel le message de demande de connexion sera transmis la prochaine fois ; et
la transmission, au premier appareil de communication (90), lorsqu'il est déterminé que le premier appareil de communication (90), qui fonctionne comme un appareil représentatif parmi la pluralité d'appareils de communication (80, 90) dans le réseau où la communication synchrone est limitée, peut être connecté au réseau, d'un instant de communication du premier appareil de communication (90) et d'un message indiquant un instant de communication d'un autre appareil de communication (80) inclus dans la pluralité d'appareils de communication (80, 90), le premier appareil de communication (90) transmet le message indiquant un instant de communication d'un autre appareil de communication (80) à l'autre appareil de communication (80).

23. Support lisible par ordinateur non transitoire stockant un programme qui amène un ordinateur d'un appareil de commande (10) à exécuter les étapes suivantes de :
surveillance d'états de connexion d'une pluralité d'appareils de communication (80, 90) où une communication synchrone est limitée à un réseau dans lequel l'appareil de commande (10) est agencé, moyennant quoi la pluralité d'appareils de communication (80, 90) forme un groupe de communication asynchrone dans un réseau différent ;
détermination, lors de la réception à partir d'un premier appareil de communication (90) inclus dans la pluralité d'appareils de communication (80, 90) d'un message de demande de connexion qui demande une connexion au réseau, si le premier appareil de communication (90) peut être connecté au réseau selon les états de la connexion de la pluralité d'appareils de communication (80, 90) au réseau ; et
notification, lorsqu'il est déterminé que la connexion du premier appareil de communication (90) au réseau n'est pas disponible, au premier appareil de communication (90) d'un résultat de détermination indiquant que la connexion n'est pas disponible et d'un instant auquel le message de demande de connexion sera transmis la prochaine fois ; et
transmission, au premier appareil de communication (90), lorsqu'il est déterminé que le premier appareil de communication (90), qui fonctionne comme un appareil représentatif parmi la pluralité d'appareils de communication (80, 90) dans le réseau où la communication synchrone est limitée, peut être connecté au réseau, d'un instant de communication du premier appareil de communication (90) et d'un message indiquant un instant de communication d'un autre appareil de communication (80) inclus dans la pluralité d'appareils de communication (80, 90), pour amener le premier appareil de communication (90) à transmettre le message indiquant un instant de communication d'un autre appareil de communication (80) à l'autre appareil de communication (80).
